# EUROPEAN PATENT APPLICATION

(11) **EP 4 342 868 A1**
(43) Date of publication of application: **27.03.2024**
(21) Application number: 22806732.8
(22) Date of filing: 10.05.2022
(51) Int. Cl.: C04B 35/10, C04B 35/66, C04B 35/645

(54) **REFRACTORY MATERIAL WITH FUNCTION OF CLEANING MOLTEN STEEL, PREPARATION METHOD THEREFOR AND USE THEREOF**

(30) Priority: 10.05.2021 CN 202110507748
(71) Applicant: The University of Science and Technology Beijing, Beijing 100083 (CN); Zibo City Luzhong Refractories Co., Ltd., Zibo, Shandong 255138 (CN); Zibo Langfeng High Temperature Materials Co., Ltd., Zibo, Shandong 255138 (CN)
(72) Inventor: CHEN, Junhong, Beijing 100083 (CN); FENG, Jisheng, Zibo, Shandong 255138 (CN); JIA, Yuanping, Zibo, Shandong 255138 (CN); LI, Bin, Beijing 100083 (CN); ZHU, Bo, Zibo, Shandong 255138 (CN); LI, Guangqi, Beijing 100083 (CN); GUO, Yutao, Zibo, Shandong 255138 (CN)
(74) Representative: Lavoix
(86) International application number: PCT/CN2022/091933
(87) International publication number: WO 2022/237769

(57) **Abstract**

The present application discloses a refractory material with the function of cleaning molten steel, a preparation method therefor and the use thereof. The material phase of the refractory material of the present application comprises one or more of CA6, CMA, corundum and ZrO₂. The refractory material prepared by the present application has a high purity, good erosion resistance, good slag permeability resistance and high thermal shock stability, reduces the amount of refractory material eroded into molten steel, reduces the pollution of the molten steel, and can also give full play to the performance advantages of high-purity raw materials.

## Description

### Technical Field

The present application relates to the technical field of refractory materials, especially to a refractory material with the function of cleaning steel, a preparation method, and use thereof.

### Background Art

At present, some middle and high-end steels such as high-performance die steel, silicon wafer cutting wire steel and automobile gearbox steel often lead to unstable steel performance because non-metallic inclusions control is not enough. The non-metallic inclusions are also closely related to the destruction of refractory materials in addition to the smelting process. In the refining process, the destruction of refractory materials is severe and fast, which also leads to more refractory materials entering in the steel to form inclusions.

The contamination of refractory material to the molten steel, on the one hand, comes from that the refractory material is damaged by the slag and enter into the steel to form inclusions. On the other hand, the oxygen potential of the relevant components in the refractory material is high, resulting in molten steel oxidation and the formation of inclusions, like SiO₂, Fe₂O₃, and other high oxygen potential components. Therefore, the refractory materials with the function of cleaning molten steel should have the following characteristics:
(1) the refractory material should have a high melting temperature and service temperature;
(2) the refractory material, as far as possible, does not contain high oxygen potential components and will not lead to molten steel oxidation to form inclusions; and
(3) the refractory material has excellent resistance to slag corrosion and slag penetration, slower formation of the metamorphic layer, and slower slag corrosion, so as to minimize the rate of entry into molten steel.

To achieve these goals, firstly, the raw material must be low oxygen potential, high-temperature resistance, and a low reaction rate at high temperature with the slag; secondly, the raw material should have the potential function of releasing C12A7 and cleaning the molten steel; then, the refractory material preparation technology should be innovative to ensure a uniform structure and reduce the introduction of low-temperature sintering agents, etc..

At present, in terms pf refractory raw materials, only CaO has the above-said functions, but CaO is easily hydrated and difficult to be used. In terms of refractory materials, it is difficult to reduce the depth of slag penetration due to the development concept and traditional theory, because it is difficult to solve the problem of porosity and structural homogeneity in the material. In terms of the refractory material preparation technology, the current preparation technology comprises not only normal temperature hydraulic forming, impact forming by the frictional brick press, and normal temperature vibration forming, but also pouring vibration forming, spray forming, etc., but these cannot solve the structural homogeneity and sintering problems of the material. Therefore, the existing technology mainly has the following problems and defects:
(1) the existing ladle lining refractory materials for industrial applications, such as corundum-spinel castable, Al₂O₃-MgO-SiO₂ castable, and other refractory materials, do not have the function of cleaning molten steel, the raw materials used in such refractory materials, such as tabular corundum, white corundum, sub-white corundum, aluminum isotope, mullite, etc., also do not have the function of cleaning molten steel, and if the raw material does not have the function of cleaning molten steel, the refractory material will not have the function of cleaning molten steel;
(2) the existing concept of refractory material development determines that castable and bricks have a very uneven distribution of pores; To alleviate the stress damage caused by temperature changes, it is necessary to have a large amount of porosity to hedge against the uneven distribution of pores, which leads to inevitable slag penetration, and the difficulty in controlling the depth of slag penetration at a low level, leading to a large amount of refractory material being eroded into the molten steel, which not only has no function of cleaning molten steel, but also dramatically pollutes the molten steel;
(3) both the corundum-spinel series castable and the newly emerged materials containing calcium hexaaluminate have defects of high porosity and rapid destruction, which lead to more refractory materials entering into the steel to form inclusions;
(4) CA6 materials have a low oxygen potential, a high melting point, a high service temperature, and a very significant potential to clean the molten steel; however, the bulk density of CA6 materials is very low due to their crystalline structure and the difficulty of sintering; therefore, the current calcium hexaaluminate castables are all made by adding TiO₂, MnO, SiO₂, Fe₂O₃, and other sintering promoting components, all at the expense of the material's high-temperature performance, which not only significantly reduces the material's high-temperature performance, but also introduces additives with high oxygen potential, thus adding harmful components to calcium hexaaluminate with the initially low oxygen potential and non-polluting molten steel;
(5) most of the castable with high content of calcium hexaaluminate have a bulk density of 2.60~2.90g/cm³, high porosity even up to 15.23%, poor resistance to the scouring of the steel, rapid destruction, and a large amount of refractory material entering into the molten steel, which not only does not clean the molten steel but pollutes it; and
(6) the existing preparation technology and development concept of the refractory material make it impossible to reduce the porosity the refractory material to a low level; if it is too low, the thermal shock stability is not good; therefore, in order to balance the thermal shock stability and slag penetration resistance, the refractory material must retain a high porosity, which results in deeper penetration of slag into the refractory material, thicker metamorphic layers and subsequent erosion and spalling damage.

The difficulty of solving the above problems and defects is:
(1) Even CA6 has the advantage of good thermal shock stability and resistance to permeation compared with traditional raw materials, based on the current technology in the field of refractory materials, the contradiction between erosion resistance, permeability resistance, and thermal shock stability performance cannot be solved by introducing calcium hexaaluminate, which is determined by the existing refractory material development concept; the development idea and concept have not changed, and it is difficult to solve the problem only by adding some components; the material system with calcium hexaaluminate still has high porosity; (2) Calcium hexaaluminate raw material(Due to its unique lamellar structure and anisotropic crystalline characteristics) is difficult to achieve sintering by of its particle diffusion; it is necessary to add TiO₂, MnO, SiO₂, Fe₂O₃, and other sintering promoting components and to form a liquid phase at high temperatures to join the particle diffusion; Otherwise, the densities of calcium hexaaluminate raw materials are low, the porosity of the material is high, and the strength is low, which cannot meet the requirements of use; (3) the introduction of sintering-promoting components leads to a decrease in the purity and high-temperature properties of calcium hexaaluminate, especially the high oxygen potential sintering-promoting components lead to an increase in the oxygen potential of the material, resulting in deoxidation inclusions in the molten steel and affecting the quality of the steel; (4) Given the surface tension of the high-temperature liquid phase, although calcium hexaaluminate materials can be achieved by adding the sintering-promoting component and the tension of the high-temperature liquid phase, it is difficult to draw the particles closer together and densify them; therefore, the bulk density of higher purity calcium hexaaluminate materials based on liquid phase sintering is generally below 2.90 g/cm³; to accomplish a density above 2.90 g/cm³, more sintering aids need to be added, and the high-temperature performance of the material will drop dramatically; (5) Given the limited role of surface tension in the high-temperature liquid phase, it is difficult for the liquid phase to draw the particles closer together and densify them; therefore, the pore structure of the refractory materials based on liquid phase sintering is inhomogeneous, not only making it difficult to guarantee thermal shock stability, but leading to uneven destruction due to the presence of pore concentration, and local destruction occurs too quickly.

The significance of solving the above problems and defects is as follows: based on CA6 with high purity, low oxygen potential and potential function of cleaning the molten steel, refractory materials with high purity, corrosion resistance and the function of cleaning the molten steel are prepared without adding any sintering additives, generating low melting point liquid phase and relying on liquid phase sintering, which can give full play to the advantages of corrosion resistance of high purity raw materials and the function of cleaning the molten steel; the refractory material with a uniform pore structure and low porosity is constructed, which not only solves the structural stress of the refractory material as a whole, but also solves the problems of slag penetration resistance and rapid erosion, and achieves the coordination and unity of penetration resistance and thermal shock stability. This not only gives full play to the advantages of high purity raw materials with good corrosion resistance and the function of CA6 material in cleaning the molten steel, but also takes into account the contradiction of thermal shock stability and slag penetration resistance, and also solves the problem that the refractory materials of ladle working lining are destructed too quickly under harsh refining conditions, reducing the problem of introducing refractory inclusions into steel, and achieving remarkable economic and social economic benefits.

### Summary of the invention

To solve the above problems, this application provides a refractory material with the function of cleaning molten steel, a preparation method, and its uses. Based on raw materials with high purity and high corrosion resistance, calcium hexaaluminate refractory products with high purity, good erosion resistance, good slag penetration resistance, and high thermal shock stability are prepared without adding sintering promotion components, generating low melting point liquid phase and relying on liquid phase sintering, which reduces the amount of refractory material eroded into the molten steel, reducing the pollution to the molten steel, and fully exerting the performance advantages of high-purity raw materials. The refractory material with a uniform material structure is constructed, which not only solves the structural stress of the refractory material as a whole, but also solves the resistance to slag penetration and realizes the coordination and unity of resistance to penetration and thermal shock stability performance. Based on the characteristics of CA6's crystalline structure, physical and chemical composition, the functions of calcium hexaaluminate such as the low oxygen potential, the adsorption of inclusions, and cleaning the molten steel are fully exerted. This not only gives full play to the advantages of high-purity raw materials with good corrosion resistance, but also takes into account the contradiction of thermal shock stability and slag penetration resistance, and also solves the problem of rapid destruction of ladle working lining refractory material under harsh refining conditions, the issue of rapid destruction of aluminum ladle life and other similar furnaces, with remarkable economic and socio-economic benefits.

The specific technical solution of this application is as follows:
1. A refractory material with the function of cleaning molten steel, wherein the phase of the refractory material comprises one or two or more selected from the group consisting of: CA6, CMA, corundum and ZrO₂.
2. The refractory material according to item 1, wherein based on the percentage of the total mass of the refractory material, the total phase content of CA6, CMA, corundum and ZrO in the refractory material is ≥90%; wherein
   the phase content of CA6 is 0-100%;
   the phase content of CMA is 0-100%;
   the phase content of ZrO₂ is 0-35%, preferably 0-15%;
   the phase content of corundum is 0-70%, preferably 0-30%;
   preferably based on the percentage of the total mass of the refractory material, the total phase content of CA6 and CMA in the refractory material is 30-100%, preferably 55-100%, or 52.5-100%;
   more preferably based on the percentage of the total mass of the refractory material, the phase content of CA6 in the refractory material is 30-100%, preferably 52.5-100%, or 55-100%.
3. The refractory material according to item 1 or 2, wherein based on the percentage of the total mass of the refractory material, the content of the sintering-promoting component in the refractory material is ≤ 1.5%, preferably 0%.
4. The refractory material according to any one of items 1-3, wherein based on the percentage of the total mass of the refractory material, the chemical composition of the refractory material comprises:
   53.20-97.13% or 55.72-97.48% of Al₂O₃, preferably 71.06-94.10% or 72.86-94.12% of Al₂O₃, more preferably 75.58-94.10% of Al₂O₃;
   1.60-8.40% or 1.76-8.4% of CaO, preferably 3.05-8.40% or 3.2-8.4% of CaO, more preferably 4.16-8.40% of CaO;
   0-8.4% of MgO, preferably 0-6.72% of MgO; and
   0-35% of ZrO₂, preferably 0-15% of ZrO₂.
5. The refractory material according to any one of items 1-4, wherein the bulk density of the refractory material is 2.90-3.65 g/cm³, preferably 2.95-3.35 g/cm³.
6. The refractory material according to any one of items 1-5, wherein the phase of the matrix part of the refractory material comprises one or two or more of corundum, CA6, CMA and ZrO₂;
   based on the percentage of the total mass of the matrix part of the refractory material, in the matrix part
   the phase content of the corundum is 0-100%, preferably 0-50%;
   the phase content of CA6 is 0-100%;
   the phase content of CMA is 0-100%;
   the phase content of ZrO₂ is 0-50%, preferably 0-25%;
   preferably based on the percentage of the total mass of the matrix part of the refractory material, the total phase content of CA6 and CMA in the matrix part is 25-100%;
   more preferably based on the percentage of the total mass of the matrix part of the refractory material, the phase content of CA6 in the matrix part is 25-100%.
7. The refractory material according to any one of items 1-6, wherein based on the percentage of the total mass of the matrix part of the refractory material, the chemical composition of the matrix part of the refractory material comprises:
   41.2-99.5% or 42.5-100% of Al₂O₃, preferably 63.15-95.80% or 64.29-95.8% of Al₂O₃; more preferably 67.46-95.80% of Al₂O₃;
   0-8.4% of CaO, preferably 1.35-8.40% or 1.47-8.4% of CaO, more preferably 2.0-8.40% of CaO;
   0-8.4% of MgO, preferably 0-6.72% of MgO; and
   0-50% of ZrO₂, preferably 0-25% of ZrO₂.
8. The refractory material according to any one of items 1-7, wherein it is prepared by a method comprising the following steps:
   mixing a granular material and a fine powder to obtain a mixed material, then subjecting the mixed material to hot-pressed sintering to obtain the refractory material.
9. The refractory material according to item 8, wherein the mass ratio of the granular material to the fine powder is 30-65:35-70; preferably 40-65:35-60.
10. The refractory material according to item 8 or 9, wherein the granular material is one or two selected from CA6 granular material and CMA granular material.
11. The refractory material according to any one of items 8-10, wherein the fine powder comprises Al₂O₃-CaO-MgO system fine powder;
   preferably the fine powder further comprises ZrO₂-containing fine powder;
   preferably based on the percentage of the total mass of the fine powder, the fine powder comprises: 50-100% of Al₂O₃-CaO-MgO system fine powder, and 0-50% of ZrO₂-containing fine powder; preferably the fine powder comprises: 75-100% of Al₂O₃-CaO-MgO system fine powder, and 0-25% of ZrO₂-containing fine powder;
   preferably the Al₂O₃-CaO-MgO system fine powder is one or two or more selected from the group consisting of: CA6 fine powder, CMA fine powder, Al₂O₃-containing fine powder, a mixed powder of Al₂O₃-containing fine powder and CaO-containing fine powder, and a mixed powder of Al₂O₃-containing fine powder, CaO-containing fine powder and MgO-containing fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
   preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, sintered magnesia fine powder, and fused magnesia fine powder;
   preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, and 12CaO·7Al₂O₃ fine powder;
   preferably the ZrO₂-containing fine powder is one or two or more selected from the group consisting of: monoclinic zirconia fine powder, tetragonal zirconia fine powder, desiliconized zirconium fine powder, and fused zirconia fine powder.
12. The refractory material according to any one of items 8-11, wherein the particle size of the fine powder is less than 0.088 mm, and the particle size of the granular material is 0.088-10 mm.
13. The refractory material according to any one of items 8-12, wherein the hot-pressed sintering is performed by
   putting the mixed material into a mold of a high temperature device for hot-pressed sintering; or
   molding the mixed material at normal temperature, and then putting it into a mold of a high temperature device for hot-pressed sintering; or
   molding the mixed material at normal temperature, and sintering it at low temperature, and then putting it into a mold of a high temperature device for hot-pressed sintering.
14. The refractory material according to any one of items 8-13, wherein the temperature of the hot-pressed sintering is 1550-1800°C; preferably the pressure of the hot-pressed sintering is 0.5-30 MPa.
15. The refractory material according to any one of items 8-14, wherein based on the percentage of the total mass of the granular material, the total content of CaO, Al₂O₃ and MgO in the chemical composition of the granular material is ≥97.5%, and the bulk density of the granular material is ≥2.90 g/cm³.
16. A preparation method for refractory material, comprising the following steps:
   mixing a granular material and a fine powder to obtain a mixed material, then subjecting the mixed material to hot-pressed sintering to obtain the refractory material.
17. The preparation method according to item 16, wherein the mass ratio of the granular material to the fine powder is 30-65:35-70, preferably 40-65:35-60.
18. The preparation method according to item 16 or 17, wherein the granular material is one or two selected from CA6 granular material and CMA granular material.
19. The preparation method according to any one of items 16-18, wherein the fine powder comprises Al₂O₃-CaO-MgO system fine powder;
   preferably the fine powder further comprises ZrO₂-containing fine powder;
   preferably based on the percentage of the total mass of the fine powder, the fine powder comprises: 50-100% of Al₂O₃-CaO-MgO system fine powder, and 0-50% of ZrO₂-containing fine powder; preferably the fine powder comprises: 75-100% of Al₂O₃-CaO-MgO system fine powder, and 0-25% of ZrO₂-containing fine powder;
   preferably the Al₂O₃-CaO-MgO system fine powder is one or two or more selected from the group consisting of: CA6 fine powder, CMA fine powder, Al₂O₃-containing fine powder, a mixed powder of Al₂O₃-containing fine powder and CaO-containing fine powder, and a mixed powder of Al₂O₃-containing fine powder, CaO-containing fine powder and MgO-containing fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
   preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, sintered magnesia fine powder, and fused magnesia fine powder;
   preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, and 12CaO·7Al₂O₃ fine powder;
   preferably the ZrO₂-containing fine powder is one or two or more selected from the group consisting of: monoclinic zirconia fine powder, tetragonal zirconia fine powder, desiliconized zirconium fine powder, and fused zirconia fine powder.
20. The preparation method according to any one of items 16-19, wherein the particle size of the fine powder is less than 0.088 mm, and the particle size of the granular material is 0.088-10 mm.
21. The preparation method according to any one of items 16-20, wherein the hot-pressed sintering is performed by
   putting the mixed material into a mold of a high temperature device for hot-pressed sintering; or
   molding the mixed material at normal temperature, and then putting it into a mold of a high temperature device for hot-pressed sintering; or
   molding the mixed material at normal temperature, and sintering it at low temperature, and then putting it into a mold of a high temperature device for hot-pressed sintering.
22. The preparation method according to items 16-21, wherein the temperature of the hot-pressed sintering is 1550-1800°C; preferably the pressure of the hot-pressed sintering is 0.5-30 MPa.
23. The preparation method according to any one of items 16-22, wherein based on the percentage of the total mass of the granular material, the total content of CaO, Al₂O₃ and MgO in the chemical composition of the granular material is ≥97.5%, and the bulk density of the granular material is ≥2.90 g/cm³.
24. A working lining of a ladle for molten steel smelting, wherein it comprises the refractory material according to any one of items 1-15, or the refractory material prepared by the preparation method according to any one of items 16-23.
25. A working lining for molten aluminum smelting and transporting ladles, wherein it comprises the refractory material according to any one of items 1-15, or the refractory material prepared by the preparation method according to any one of items 16-23.
26. A refractory lining for industrial furnaces, wherein it comprises the refractory material according to any one of items 1-15, or the refractory material prepared by the preparation method according to any one of items 16-23.

### Effect of the invention

The existing refractory materials, whether castables or bricks, have an uneven distribution of pores. In order to mitigate the stress damage caused by temperature changes, there must be a large number of pores to hedge against the uneven distribution of pores, which leads to inevitable slag penetration and is difficult to control. In order to enhance the resistance to slag erosion, only the purity of the raw material can be increased, while the high purity raw material is difficult to achieve sintering by particle diffusion alone, and the strength cannot be guaranteed. High-purity refractory systems can only be sintered by adding sintering aids in the liquid phase and obtained strength, but the appearance of low-melting liquid phase leads to the reduction of erosion resistance. None of the available refractory materials and refractory raw materials has the potential function of cleaning molten steel.

The calcium hexaaluminate material is difficult to sinter due to its structural characteristics, Although densification can be achieved by adding sintering additives, its high-temperature performance and the resistance to slag erosion is greatly reduced, and the resistance to thermal shock stability is reduced; the existing refractory materials are difficult to achieve high densification based on the closest accumulation of particles and by means of the surface tension of the liquid phase. Compared with the prior art, the refractory material of the present application has the following advantages:
(1) The refractory materials provided in this application do not use any sintering-promoting components in the preparation process (said sintering-promoting components are SiO₂, TiO₂, Fe₂O₃, R₂O, etc., where R₂O is a general term for K₂O and Na₂O), and the sintering is not achieved by means of the amount of liquid phase, but by means of high temperature and pressure to promote particle rearrangement and particle diffusion, therefore, the refractory material provided by this application has less liquid phase content at high temperature, uniform material structure, good thermal shock stability and uniform corrosion loss .
(2) in the refractory material provided by this application, the total content of sintering promoting components such as SiO₂, TiO₂, Fe₂O₃, R₂O (a generic term for K₂O and Na₂O) introduced by the raw material is less than or equal to 1.5%, and the chemical composition purity of the material system is high, which is higher than that of calcium hexaaluminate system refractory material prepared by the current prior art, and the high-temperature liquid phase is less, which can fully exert the performance advantages of high-purity raw materials, the slag erosion resistance is very prominent, and the pollution to molten steel is small;
(3) the material phase of the refractory material provided in this application comprises one or two or more of corundum, CA6, CMA, and ZrO₂, and based on the percentage of the total mass of said refractory material, the total phase content of said refractory material is ≥ 90%; the phase is pure and predominantly of CA6 structure phase, said CA6 structure phase comprises CA6 phase and CMA phase synthesized on the basis of CA6 structure; CA6 structure phase releases Cl2A7 with refining effect when reacting with slag, desulphurizing, adsorbing inclusions and cleaning the molten steel;
(4) the bulk density of the CA6 refractory material provided in this application is 2.90 to 3.65 g/cm³, which is much higher than that of the calcium hexaaluminate refractory material prepared by the prior art; under the condition of maintaining the high purity of the material system, the material with high bulk density in this application has greatly increased resistance to mechanical scouring of the molten steel and slag, improved resistance to slag penetration, and a greatly prolonged service life and the inclusions entering into the molten steel are also reduced, which greatly contributes to the cleanliness of the molten steel quality;
(5) the refractory material provided in this application has a homogeneous organizational structure and the problem of localized advanced damage does not occur; the material is balanced and slowly corroded away during use, so there is no spalling type of laminar fall off and large pieces of damage, there is little pollution to the molten steel, and the service life will be greatly prolonged;
(6) the refractory material provided in this application is based on high-purity raw materials, with high density, a homogeneous structure and few high oxygen potential components (referring to SiO₂, TiO₂, Fe₂O₃, R₂O, etc.), so the material has excellent slag erosion resistance, penetration resistance, and thermal shock stability, which well solves the contradiction among them, gives full play to the performance advantages of high-purity raw materials, greatly prolongs the service life of the material, and also plays the role of cleaning molten steel; it can be widely used in the metallurgical industry as well as in the masonry of cement rotary kilns and other industrial furnaces, which increases the operating cycle of equipment, reduces production costs, saves energy, and reduces emissions;
(7) the preparation method provided in this application has the advantages that the selected raw materials are simple and abundant, good sintering of high-purity refractory materials of the calcium hexaaluminate system can be achieved without the use of any sintering-promoting components and with the aid of a hot-pressed sintering process, and the method is scientific and reasonable;
(8) the calcium hexaaluminate system refractory material provided by this application can be widely used in steelmaking production lines, such as ladle working lining for extra-furnace refining; it has good anti-erosion properties, can desulphurize and adsorb inclusions, greatly reducing the destruction of refractory materials and the impact on the molten steel during the smelting of high-end special steel, improving the overall quality of high-end special steel in China's metallurgical industry, increasing the operating cycle of equipment, improving economic efficiency and has significant social benefits;
(9) calcium hexaaluminate system refractory material in this application can be widely used in the refractory lining of rotary kilns, such as the transition zone of cement rotary kilns, etc. with good erosion resistance and low thermal conductivity, which is significantly better than many existing refractory materials such as silica-mullite bricks and magnesia-alumina spinel bricks, and can increase the operating cycle of equipment, reduce heat loss and improve economic efficiency; and
(10) calcium hexaaluminate system refractory material in this application has low sensitivity to the atmosphere, which can also be widely used in the masonry of industrial kilns under high temperatures, reducing atmosphere and alkaline atmosphere erosion conditions, such as petrochemical cracking furnaces, etc.. It has good stability, low thermal conductivity, and good erosion resistance, which is significantly better than many existing corundum bricks and other refractory materials, and can increase the operating cycle of equipment, reduce heat loss and improve economic efficiency.

### Brief description of drawings

Fig. 1 is a schematic diagram of molten steel smelting in a crucible prepared in Example 1 of the present application.
Fig. 2 shows the structure of the interface formed between the Example of the application and the slag.

### Detailed description of the invention

The present application is described in detail below in connection with the embodiments described in the accompanying drawings, wherein the same numbers in all the drawings indicate the same features. Although specific embodiments of the present application are shown in the drawings, it should be understood that it can be embodied in various forms and should not be limited by the embodiments set forth herein. Rather, these embodiments are provided for thoroughly understanding of the present application and fully conveying the scope of the present application to those skilled in the field.

It should be noted that certain terms are used in the specification and claims to refer to particular components. It should be understood by those skilled in the art that they may use different terms to refer to the same element. The specification and claims do not use differences in nouns as a way of distinguishing components, but use differences in the function of components as a criterion for distinguishing. As mentioned throughout the specification and claims, "comprises" or "includes" are open-ended terms and should therefore be interpreted as "including but not limited to." The specification subsequently is preferred embodiments for implementing the application. However, the description is intended as a general specification principle of the specification and is not intended to limit the scope of the application. The scope of protection of this application should be defined by the appended claims.

The present application provides a refractory material with the function of cleaning molten steel, the phase of the refractory material comprises one or two or more selected from the group consisting of: CA6, CMA, corundum, and ZrO₂.

In one specific embodiment, the phase of said refractory material consists of one or two or more of CA6, CMA, corundum, and ZrO₂.

In a specific embodiment, the phase of the refractory material further comprises MA.

In this application, "CA6" is the abbreviation of calcium hexaaluminate, its structural formula is CaO·6Al₂O₃, its melting point is 1875°C, and the theoretical density is 3.79g/cm³. The characteristics of this material are: good stability at low oxygen partial pressure; lamellar stacking structure, crystal growth anisotropy, the slow growth rate in the C-axis and difficult to sinter. When reacting with slag, CA2 (abbreviation of CaO·2Al₂O₃) and CA (abbreviation of CaO·Al₂O₃) are generated. CA2 is a solid phase, and CA is a liquid phase at steelmaking temperature. The solid-liquid mixed phase blocks the pores and inhibits slag penetration.

In this application, "MA" is the abbreviation of MgO·Al₂O₃; in this application, " C2M2A14" is the abbreviation of 2CaO·2MgO·14Al₂O₃; in this application, "CM2A8" is the abbreviation of CaO·2MgO·8Al₂O₃; in this application, "CMA" is the collective name of C2M2A14 and CM2A8. "Both C2M2A14 and CM2A8 are based on stacking CA6 structural units with MA in the C-axis, which is similar to CA6.

In this application, a "phase" is a phase of a substance that has specific physicochemical properties.

The phases of the refractory material are determined by XRD, for example, by grinding the material to below 325 mesh and then scanning it using an X-ray diffractometer. The diffraction data are analyzed and matched to a standard PDF card to obtain the relevant phases, which are then fitted to the diffraction data to obtain the content of the relevant phases.

Regarding the ZrO₂ phase, since H_{f}O₂ is symbiotic with ZrO₂, it is difficult to separate, and the crystal forms are similar. Therefore, the following explanation is made.,
1) The H_{f}O₂ phase is included in ZrO₂;
2) Due to different temperatures and processes, and uneven distribution of the composition (it is impossible to achieve absolute uniformity), phases such as ZrO₂-CaO solid solution, ZrO₂-MgO solid solution, CaO·ZrO₂, MgO·ZrO₂, etc. may appear in the final product. In the case of the appearance of ZrO₂-CaO solid solution, ZrO₂-MgO solid solution, CaO·ZrO₂, MgO·ZrO₂, etc., the ZrO₂ content is firstly corrected by combining the XRF results, and then this ZrO₂ content is converted to a zirconia phase, converting CaO, MgO, etc. that have been solidly soluble or bound in the form of CaO·ZrO₂, MgO·ZrO₂, etc. into CA6 and CMA (this CaO and MgO content is first converted into CA6 and MA, and then into CA6 and CMA according to temperature or CaO-MgO-Al₂O₃ system composition, etc.), then normalizing all these phases to 100%, and calculating the percentage of each phase.

Regarding the content of ZrO₂ in the chemical composition, the H_{f}O₂ content is counted in the ZrO₂ content in the XRF of this application because H_{f}O₂ is symbiotic with ZrO₂ and is difficult to separate.

In a specific embodiment, the refractory material of this application, wherein based on the percentage of the total mass of the refractory material, the total phase content of CA6, CMA, corundum and ZrO in the refractory material is ≥90%; for example, it may be 90%, 91%, 92%, 93%, 94%, 95%, 96%, 97%, 98%, 99%, 100%, etc.

In a preferred embodiment, the refractory material of this application, based on the percentage of the total mass of the refractory material
the phase content of CA6 is 0-100%;
the phase content of CMA is 0-100%;
the phase content of ZrO₂ is 0-35%, preferably 0-15%;
the phase content of corundum is 0-70%, preferably 0-30%;
for example, the phase content of CA6 can be 0, 5%, 10%, 15%, 20%, 25%, 30%, 35%, 40%, 45%, 50%, 55%, 60%, 65%, 70%, 75%, 80%, 85%, 90%, 95%, 100%, etc;
the phase content of CMA can be 0, 5%, 10%, 15%, 20%, 25%, 30%, 35%, 40%, 40%, 40%, 45%, 50%, 55%, 60%, 65%, 70%, 75%, 80%, 85%, 90%, 95%, 100% etc;
the phase content of ZrO₂ can be 0, 5%, 10%, 15%, 20%, 25%, 30%, 35%, etc;
the phase content of corundum can be 0%, 5%, 10%, 15%, 20%, 25%, 30%, 35%, 40%, 45%, 50%, 55%, 60%, 65%, 70%, etc.

In a preferred embodiment, based on the percentage of the total mass of the refractory material, the total phase content of CA6 and CMA in said refractory material is 30-100%, for example, it may be 30%, 35%, 40%, 45%, 50%, 55%, 60%, 65%, 70%, 75%, 80%, 85%, 90%, 95%, 100%, etc., preferably 55-100%.

In a more preferred embodiment, based on the percentage of the total mass of the refractory material, the material phase content of CA6 in said refractory material is 30 -100%, for example, 30%, 35%, 40%, 45%, 50%, 55%, 60%, 65%, 70%, 75%, 80%, 85%, 90%, 95%, 100%, etc., preferably 55-100%.

In a more preferred embodiment, based on the percentage of the total mass of the refractory material, the material phase content of CA6 in the refractory material is 30-100%, preferably 55-100%. In addition to the CA6 phase, the other phases are preferred in the order ZrO₂ > CMA > corundum. That is, the inclusion of ZrO₂ is preferred over the inclusion of CMA, and the inclusion of CMA is preferred over the inclusion of corundum.

In one specific embodiment, based on the percentage of the total mass of the refractory material, in said refractory material, the material phase content of CA6 is 0 -100%, the material phase content of CMA is 0-100%, the material phase content of corundum is 0-70%, and the material phase content of ZrO₂ is 0-35%.

In a preferred embodiment, based on the percentage of the total mass of the refractory material, in said refractory material, the material phase content of CA6 is 0-100%, the material phase content of CMA is 0-100%, the material phase content of corundum is 0-30%, the material phase content of ZrO₂ is 0-15%, and the total phase content of CA6 and CMA is 52.5%-100%.

In a more preferred embodiment, based on the percentage of the total mass of the refractory material, in said refractory material, the material phase content of CA6 is 52.5-100%, the material phase content of corundum is 0-30%, and the material phase content of ZrO₂ is 0-15%.

In a specific embodiment, the refractory material of the present application, based on the percentage of the total mass of the refractory material, the content of the sintering-promoting component in the refractory material is ≤ 1.5%, preferably 0.

For example, based on the percentage of the total mass of the refractory material, the content of the sintering-promoting component in said refractory maybe 1.5%, 1.4%, 1.3%, 1.2%, 1.1%, 1.0%, 0.9%, 0.8%, 0.7%, 0.6%, 0.5%, 0.4%, 0.3%, 0.2%, 0.1%, 0 or any range in between.

The said sintering-promoting components are SiO₂, TiO₂, Fe₂O₃, and R₂O, due to the low content of the sintering-promoting components, the purity of chemical composition in the material system is high, whereas R₂O refers to oxides of alkali metals.

In a specific embodiment, the refractory material of the present application, the chemical composition of said refractory material in terms of the percentage content of the total mass of said refractory material comprising

In a specific embodiment, the refractory material of the present application, based on the percentage of the total mass of the refractory material, the chemical composition of said refractory material comprises:
55.72%-97.48% of Al₂O₃, preferably 72.86%-94.12% of Al₂O₃, e.g. it may be 55.72%, 60%, 65%, 70%, 75%, 80%, 85%, 90%, 95%, 97.48% or any range in between of Al₂O₃;
1.76%-8.38% of CaO, preferably 3.20%-8.40% of CaO, e.g., it may be 1.76%, 2%, 2.5%, 3%, 3.5%, 4%, 4.5%, 5%, 5.5%, 6%, 6.5%, 7%, 7.5%, 8%, 8.38% or any range in between of CaO;
0-8.4% of MgO, preferably 0%-6.72% of MgO, which may be, for example, 0%, 0.5%, 1%, 1.5%, 2%, 2.5%, 3%, 3.5%, 4%, 4.5%, 5%, 5.5%, 6%, 6.5%, 7%, 7.5%, 8%, 8.4% or any range in between of MgO; and
0-35% of ZrO₂, preferably 0-15% of ZrO₂, e.g., it may be 0%, 5%, 10%, 15%, 20%, 25%, 30%, 35% or any range in between of ZrO₂.

In a specific embodiment, the refractory material of the present application, based on the percentage of the total mass of the refractory material, the chemical composition of said refractory material comprises: 53.20% ~97.13% of Al₂O₃, 0-8.40% of MgO, 1.60% -8.40% of CaO, and 0-35% of ZrO₂.

In a preferred embodiment, the refractory material of the present application, based on the percentage of the total mass of the refractory material, the chemical composition of said refractory material comprises: 71.06%-94.10% of Al₂O₃, 0-8.40% of MgO, 3.05%-8.40% of CaO, and 0-15% of ZrO₂.

In a more preferred embodiment, the refractory material of the present application, based on the percentage of the total mass of the refractory material, the chemical composition of said refractory material comprises: 75.58%-94.10% of Al₂O₃, 4.16%-8.40% of CaO, and 0-15% of ZrO₂.

The chemical composition of the said refractory is determined by fluorescence analysis, that is, XRF, following GB/T21114-2007.

In a specific embodiment, the bulk density of the refractory material is 2.90~3.65g/cm³, preferably 2.95g/cm³~3.35g/cm³, for example, 2.90g/cm³, 2.91g/cm³, 2.92g/cm³, 2.93g/cm³, 2.95g/cm³, 2.96g/cm³, 2.97g/cm³, 2.98g/cm³, 2.9 9g/cm³, 3.00g/cm³, 3.05g/cm³, 3.10g/cm³, 3.15g/cm³, 3.25g/cm³, 3.35g/cm³, 3.40g/cm³, 3.45g/cm³, 3.50g/cm³, 3.5 5g/cm³, 3.60g/cm³, 3.65g/cm or any range in between.

The bulk density of the refractory material is determined according to GB/T2997-2000.

In one specific embodiment, the phase of the matrix part of said refractory comprises one or two or more of corundum, CA6, CMA, and ZrO₂.

In one specific embodiment, the phase of the matrix part of said refractory comprises corundum, CA6, and CMA.

In a specific embodiment, based on the percentage of the total mass of the matrix part of said refractory material, in said matrix part,

The phase content of corundum is 0-100%, preferably 0-50%.
The phase content of CA6 is 0-100%;
The phase content of CMA is 0-100%;
The phase content of ZrO₂ is 0-50%, preferably 0-25%.

For example, based on the percentage of the total mass of the matrix part of said refractory material, in the matrix part, the phase content of the corundum can be 0, 5%, 10%, 15%, 20%, 25%, 30%, 35%, 40%, 45%, 50%, 55%, 60%, 65%, 70%, 75%, 80%, 85%, 90%, 95%, 100%, etc.;
The phase content of CA6 can be 0, 5%, 10%, 15%, 20%, 25%, 30%, 35%, 40%, 45%, 50%, 55%, 60%, 65%, 70%, 75%, 80%, 85%, 90%, 95%, 100% etc;
The phase content of CMA can be 0, 5%, 10%, 15%, 20%, 25%, 30%, 35%, 40%, 40%, 40%, 45%, 50%, 55%, 60%, 65%, 70%, 75%, 80%, 85%, 90%, 95%, 100%, etc.;
The phase content of ZrO₂ can be 0, 5%, 10%, 15%, 20%, 25%, 30%, 35%, 40%, 45%, 50%, etc.

In a preferred embodiment, based on the percentage of the total mass of the matrix part of the refractory material, the total phase content of CA6 and CMA in the matrix part is 25%-100%, such as 25%, 30%, 35%, 40%, 45%, 50%, 55%, 60%, 65%, 70%, 75%, 80%, 85%, 90%, 95%, 100%, etc.

In a more preferred embodiment, based on the percentage of the total mass of the matrix part of the refractory material, the phase content of CA6 in the matrix part is 25%-100%, such as 25%, 30%, 35%, 40%, 45%, 50%, 55%, 60%, 65%, 70%, 75%, 80%, 85%, 90%, 95%, 100%, etc.

In a more preferred embodiment, a multi-phase composite is preferred in the matrix part of said refractory material. For example, a three-phase composite of ZrO₂, CMA, and corundum is preferred over a two-phase composite of CMA and corundum.

In a specific embodiment, based on the percentage of the total mass of the matrix part of said refractory material, in said matrix part, the phase content of CA6 is 0-100%, the phase content of CMA is 0-100%, the phase content of corundum is 0-100% and the phase content of ZrO₂ is 0-50%.

In a preferred embodiment, based on the percentage of the total mass of the matrix part of said refractory material, in said matrix part, the phase content of CA6 is 0-100%, the phase content of CMA is 0-100%, the phase content of corundum is 0-50% and the phase content of ZrO₂ is 0-25%.

In a more preferred embodiment, based on the percentage of the total mass of said matrix part of the refractory material, in said matrix part, the phase content of CA6 is 0-100%, the phase content of corundum is 0-50%, and the phase content of ZrO₂ is 0-25%.

In a specific embodiment, based on the percentage of the total mass of said matrix portion of the refractory material, the chemical composition of said matrix part of the refractory material comprises:
42.5%-100% of Al₂O₃, preferably 64.29%-95.8% of Al₂O₃;
0-8.4% of CaO, preferably 1.47%-8.4% of CaO;
0-8.4% of MgO, preferably 0-6.72% of MgO; and
0-50% of ZrO₂, preferably 0-25% of ZrO₂;
For example, based on the percentage of the total mass of the matrix part of said refractory material, the content of Al₂O₃ may be 42.5 %, 45 %, 50 %, 55 %, 60 %, 65 %, 70 %, 75 %, 80 %, 85 %, 90 %, 95 %, 100 %, etc.,;
The content of CaO may be 0, 0.5%, 1%, 1.5%, 2%, 2.5%, 3%, 3.5%, 4%, 4.5%, 5%, 5.5%, 6%, 6.5%, 7%, 7.5%, 8%, 8.4%, etc;
The content of MgO may be 0, 0.5%, 1%, 1.5%, 2%, 2.5%, 3%, 3.5%, 4%, 4.5%, 5%, 5.5%, 6%, 6.5%, 7%, 7.5%, 8%, 8.4%, etc;
The content of ZrO₂ is 0%, 5%, 10%, 15%, 20%, 25%, 30%, 35%, 40%, 45%, 50%, etc.

In one specific embodiment, based on the percentage of the total mass of said matrix part of the refractory material, the chemical composition of said matrix part of the refractory material comprises 41.2%-99.5% of Al₂O₃, 0-8.40% of MgO, 0-8.40% of CaO and 0-50% of ZrO₂.

In a preferred embodiment, based on the percentage of the total mass of said matrix part of the refractory material, the chemical composition of said matrix part of the refractory material comprises 63.15%-95.80% of Al₂O₃, 0-8.40% of MgO, 1.35%-8.40% of CaO and 0-25% of ZrO₂.

In a more preferred embodiment, based on the percentage of the total mass of said matrix part of the refractory material, the chemical composition of said matrix part of the refractory material comprises 67.46%-95.80% of Al₂O₃, 2.0%-8.40% of CaO and 0-25% of ZrO₂.

The said matrix part of the refractory material refers to the part that does not include granular material.

The phase of matrix part of the refractory material is determined by micro-area diffraction using XRD.

For example, the micro-area diffraction determination can be performed by selecting seven different samples from which seven specimens are cut out. The matrix part of each specimen is subjected to micro-area diffraction, and the pattern is fitted to the full spectrum to determine the content of each phase. The two data with large deviations are removed, and the remaining five specimens were averaged to obtain the phase content of the refractory material matrix. The selected matrix area should be maximized when making the sample and scanning to ensure accurate analysis and low deviation.

In a specific embodiment, the refractory material of the present application is prepared by a method comprising the following steps:
mixing a granular material and a fine powder to obtain a mixed material, then subjecting the mixed material to hot-pressed sintering to obtain said refractory material.

The granular material refers to the part that cannot be sieved through a 180-mesh square-hole sieve (e.g., the square-hole sieve produced by Xinxiang Zhongtuo Machinery Co. mm), i.e. the part located on the 180-mesh square hole sieve with a particle size of above 0.088 mm, for example, the particle size of the granular material can be 0.20 mm, 0.25 mm, 0.30 mm, 0.35 mm, 0.40 mm, 0.45 mm, 0.50 mm, 0.55 mm, 0.60 mm, 0.65 mm, 0.70 mm, 0.75 mm, 0.80 mm, 0.85 mm, 0.90 mm, 0.95 mm, 1 mm, 2 mm, 3 mm, 4 mm, 5mm, 6mm, 7mm, 8mm, 9mm, 10mm, 12mm, 14mm, 15mm, 17mm, 19mm, 20mm, 22mm, 24mm, 25mm or any range in between, preferably 0.088-10mm.

The fine powder refers to the part passing through the 180-mesh square hole sieve, that is, the part located at the bottom of the 180-mesh square hole sieve with a particle size of less than 0.088 mm.

The hot-pressed sintering of this application refers to a method of achieving sintering and preparing materials under the combined action of applied pressure and temperature.

In a specific embodiment, the refractory material of the present application, the total mass of said granular material to the total mass of said fine powder is 30-65:35-70, preferably 40-65:35-60. For example it may be 30:70, 31:69, 32:68, 33:67, 34:66, 35:65, 36:64, 37:63, 38:62, 39:61 40:60.41:59, 42:58, 43:57, 44:56, 45:55, 46:54, 47:53, 48:52, 49:51, 50:50.51:49, 52:48, 53:47, 54:46, 55:45, 56:44, 57:43, 58:42, 59:41, 60:40.61. 39, 62:38, 63:37, 64:36, 65:35, or any range in between
In a specific embodiment, the refractory material of the present application, said granular material is one or two or three selected from CA6 granular material, C2M2A14 granular material, and CM2A8 granular material. Based on the percentage of the total mass of the fine powder, the fine powder comprises 50%-100% of Al₂O₃-CaO-MgO system fine powder, preferably 75%-100% of Al₂O₃-CaO-MgO system fine powder(for example comprising 50%, 55%, 60%, 65%, 70%, 75%, 80%, 85%, 90%, 95%, 100% or any range in between of Al₂O₃-CaO-MgO system fine powder) and 0-50% of ZrO₂-containing fine powder, preferably 0-25% of ZrO₂-containing fine powder, e.g., comprising 0%, 5%, 10%, 15%, 20%, 25%, 30%, 35%, 40%, 45%, 50% or any range in between of ZrO₂-containing fine powder.

In a specific embodiment, the refractory material of the present application, the Al₂O₃-CaO-MgO fine powder system is one or two or more selected from the group consisting of: CA6 fine powder, C2M2A14 fine powder, CM2A8 fine powder, Al₂O₃-containing fine powder, a mixed powder of Al₂O₃-containing fine powder and CaO-containing fine powder, a mixed powder of Al₂O₃-containing fine powder, CaO-containing fine powder and MgO-containing fine powder;
the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
the MgO-containing fine powder is one or two or more selected from the group consisting of: magnesium carbonate fine powder, light-calcined magnesia fine powder, brucite fine powder, magnesium hydroxide fine powder, magnesium chloride fine powder, sintered magnesia fine powder and fused magnesia fine powder;
the CaO-containing fine powder is one or two or more selected from the group consisting of: quicklime fine powder, limestone fine powder, calcium hydroxide fine powder, CaO·Al₂O₃ fine powder (CA fine powder), CaO·2Al₂O₃ fine powder (CA2 fine powder), and 12CaO·7Al₂O₃ fine powder (C₁₂A₇ fine powder); and
the ZrO₂-containing fine powder is one or two or more selected from the group consisting of: monoclinic zirconia fine powder, tetragonal zirconia fine powder, desiliconized zirconium fine powder, and fused zirconia fine powder.

The term "Al₂O₃-containing fine powder" in this application refers to a fine powder of alumina system whose chemical composition is mainly Al₂O₃.

The term "MgO-containing fine powder" in this application refers to a fine powder whose chemical composition is mainly MgO.

The term "CaO-containing fine powder" in this application refers to a fine powder whose chemical composition comprises CaO components, a fine powder including CaO, and Al₂O₃, or a fine powder including CaO, MgO, and Al₂O₃.

The term "ZrO₂-containing fine powder" in this application refers to a fine powder whose chemical composition is mainly ZrO₂.

The "active α-Al₂O₃ fine powder" of this application is an alumina powder with high activity (which is mainly α-Al₂O₃), obtained by treating industrial alumina or aluminum hydroxide as a raw material at 1250-1450°C;

The "γ-Al₂O₃ fine powder" of this application is an alumina powder with a high specific surface area and good adsorption properties, obtained by treating aluminum hydroxide as a raw material.

The "ρ-Al₂O₃ fine powder" of this application is an alumina powder with a certain degree of hydration bonding obtained by rapid treatment of aluminum hydroxide at 600-900°C.

The "industrial alumina fine powder" of this application is a mineral whose main component is α-Al₂O₃, which is prepared by calcining aluminum hydroxide as raw material at 900-1250°C.

The "white corundum fine powder" of this application is an alumina raw material with an alumina trioxide (Al₂O₃) content of 97.5% or more, prepared by electric melting of industrial alumina as raw material, and comprises a small amount of iron oxide, silicon oxide, and other components, and is white in color.

The "sintered corundum fine powder" in this application refers to refractory clinker made from alumina as raw material, finely ground into pellets or billets, and sintered at 1750-1900°C. It has a high bulk density, low porosity, and excellent resistance to thermal shock and slag erosion at high temperatures.

The "tabular corundum fine powder" in this application has a coarsely crystallized and well-developed α-Al₂O₃ crystal structure with an Al₂O₃ content of 97.0% or more and it has a tabular crystal structure with small pores and a high number of closed pores.

The "light-calcined magnesia fine powder" in this application is a magnesia powder raw material with a high activity and magnesite phase, prepared by calcining magnesite at a temperature of 800-1000°C, with magnesium carbonate as the main component.

The "brucite fine powder" in this application is a raw material with Mg(OH)₂ as the main component.

The "sintered magnesia fine powder" in this application is a dense magnesia raw material with a MgO content of ≥ 94.5%, produced by light-calcined magnesia at high temperatures.

The "fused magnesa fine powder" in this application is a dense magnesium oxide raw material with a MgO content of ≥ 96.5% prepared by arc melting from light-calcined magnesia or magnesite.

The main component of the "quicklime fine powder" in this application is calcium oxide, which is usually prepared by calcining a natural rock whose main component is calcium carbonate at a high temperature to decompose and produce carbon dioxide and calcium oxide with the chemical formula: CaO, i.e., quicklime, also known as marble.

The "monoclinic zirconia fine powder" in this application refers to zirconia fine powder with a monoclinic crystal system.

The "tetragonal zirconia fine powder" in this application refers to zirconia fine powders with a tetragonal crystal system.

The "desiliconized zirconium fine powder" in this application refers to zirconia fine powder obtained by debilitating zircon sand.

The "fused zirconia fine powder" in this application refers to the raw material of zirconia prepared by the fusion method.

In a specific embodiment, the refractory material of the present application, said hot-pressed sintering is putting the mixed material into a mold of a high temperature device for hot-pressed sintering or molding the mixed material at normal temperature, and then putting it into a mold of a high temperature device for hot-pressed sintering or molding the mixed material at normal temperature, and sintering it at low temperature, and then putting it into a mold of a high temperature device for hot-pressed sintering.

Putting said mixed material into a mold of a high-temperature device for hot-pressed sintering means that the mixed material is put into the mold of the high-temperature device to warm up, applying pressure when the temperature rises to the maximum temperature to reach sintering, or continuously holding the temperature and pressure for a certain time to complete the hot-pressed sintering of the material; or putting the mixed material into the mold of the high-temperature device, applying pressure when the temperature is raised to a certain temperature, then gradually increasing the temperature and simultaneously gradually increasing the pressure until the temperature reaches the maximum temperature and the pressure reaches the maximum value, or continuously holding the temperature and pressure for a certain time to complete the hot-pressed sintering of the material; or putting the mixed material into the mold of the high-temperature device and gradually increasing the pressure applied to the mixture while the temperature is increased until the temperature reaches the maximum temperature and the pressure reaches the maximum value, or continuously holding the temperature and pressure for a certain time to complete the hot-pressed sintering of the material.

Molding the mixed material at normal temperature, and then putting it into a mold of a high temperature device for hot-pressed sintering means that the mixed material is pressed into a billet at normal temperature, drying it and then putting it in the mold of the high temperature device for hot-pressed sintering; or applying pressure when the billet is heated to the maximum temperature to reach sintering, or continuously holding the temperature and pressure for a certain period of time to complete the hot-pressed sintering of the material; or putting the billet into the mold of the high-temperature device, and applying pressure when the temperature is raised to a certain temperature, then gradually raising the temperature and simultaneously increasing the applied pressure until the temperature reaches the maximum temperature and the pressure reaches the maximum value, or continuously holding the temperature and pressure for a certain period of time to complete the hot-pressed sintering of the material; or putting the billet into the mold of the high-temperature device, and gradually increasing the pressure applied to the mixed material while the temperature is increased until the temperature reaches the maximum temperature and the pressure reaches the maximum value, or continuously holding the temperature and pressure for a certain period of time to complete the hot-pressed sintering of the material.

Molding the mixed material at normal temperature, and sintering it at low temperature, and then putting it into a mold of a high temperature device for hot-pressed sintering means that the mixed material is pressed at normal temperature and pre-sintered at 1350 to 1500°C before hot-pressed sintering. The hot-pressed sintering operation is the same as above.

In a specific embodiment, the refractory material of this application, the high temperature device is a kiln that combines high temperature and hot pressing.

In a specific embodiment, the refractory material of this application, the temperature of the hot-pressed sintering is 1550°C-1800°C. For example, it may be 1550°C, 1600°C, 1650°C, 1700°C, 1750°C, 1800°C or any range in between. The pressure of hot-pressed sintering is 0.5~30MPa, For example, it can be 0.5MPa, 1MPa, 1.5MPa, 2Mpa, 2.5MPa, 3Mpa, 3.5MPa, 4Mpa, 4.5MPa, 5Mpa, 5.5MPa, 6Mpa, 6.5MPa, 7Mpa, 7.5MPa, 8Mpa, 8.5MPa, 9Mpa, 9.5MPa, 10MPa, 10.5MPa, 11MPa, 11.5MPa, 12MPa, 12.5MPa, 13MPa, 13.5MPa, 14MPa, 14.5MPa, 15MPa, 20MPa, 25MPa, 30MPa or any range in between.

The pressure mentioned refers to the hot-pressed strength, and hot-pressed strength is the pressure per unit area applied to the prepared refractory material at high temperatures.

In a specific embodiment, the refractory material of this application, the total content of CaO, Al₂O₃ and MgO in the chemical composition of the granular material is≥97.5%. The bulk density of the granular material is ≥2.90g/cm³, such as 2.90g/cm³, 2.91g/cm³, 2.92g/cm³, 2.93g/cm³, 2.94g/cm³, 2.95g/cm³, 2.96g/cm³, 2.97g/cm³, 2.98g/cm³, 2.99g/cm³, 3.00g/cm³, 3.05g/cm³, 3.10g/cm³, 3.15g/cm³, 3.25g/cm³, 3.30g/cm³, 3.35g/cm³, 3.40g/cm³, 3.45g/cm³, 3.50g/cm³, 3.55g/cm³, 3.60g/cm³, 3.65g/cm³, etc.

When the granular material for the preparation of the refractory material is CA6 granular material, the fine powder comprises CA6 fine powder, or Al₂O₃-containing fine powder, or CA6 fine powder and Al₂O₃-containing fine powder, or Al₂O₃-containing powder and CaO-containing fine powder.

In one specific embodiment, the refractory material of the present application, the physical phase comprises CA6.

In a specific embodiment, the refractory material of this application, the physical phase comprises corundum and CA6.

In a specific embodiment, said fine powder further comprises ZrO₂ fine powder, and the phase of the refractory material of the present application further comprises ZrO₂.
In a specific embodiment, the refractory material of the present application, based on the percentage of the total mass of said refractory material;
The phase content of CA6 is 30%-100%, preferably 55%-100%, for example 30%, 35%, 40%, 45%, 50%, 55%, 60%, 65%, 70%, 75%, 80%, 85%, 90%, 95%, 100%, etc.;
The phase content of corundum is 0-70%, preferably 0-30%, for example 0%, 5%, 10%, 15%, 20%, 25%, 30%, 35%, 40%, 45%, 50%, 55%, 60%, 65%, 70%, etc.;
The phase content of ZrO₂ is 0-35%, preferably 0-15%, for example 0%, 3%, 5%, 8%, 10%, 12%, 15%, 18%, 20%, 22%, 25%, 27%, 30%, 32%, 35%, etc.

In a specific embodiment, the refractory material of the present application, based on the percentage of the total mass of said refractory material, the chemical composition of said refractory material comprises:
59.54%-97.48% of Al₂O₃, preferably 77.86%-94.12% of Al₂O₃, for example 59.54%, 62%, 65%, 67%, 70%, 73%, 75%, 77%, 80%, 83%, 85%, 90%, 92%, 95%, 96.64%, 97%, 97.48%, etc;
2.52%-8.4% of CaO, preferably 4.62%-8.4% of CaO, for example 2.52%, 3%, 3.5%, 4%, 4.5%, 5%, 5.5%, 6%, 6.5%, 7%, 7.5%, 8%, 8.4%, etc.; and
0-35% of ZrO₂, preferably 0-15% of ZrO₂, for example 0%, 3%, 5%, 8%, 10%, 12%, 15%, 18%, 20%, 22%, 25%, 27%, 30%, 32%, 35% etc..

In a specific embodiment, the refractory material of the present application, the phase of the matrix part of said refractory material comprises one or two of corundum and CA6.

In a specific embodiment, the refractory material of the present application, the phase of said matrix part of the refractory material comprises: one or two of corundum and CA6, and ZrO₂.

In a specific embodiment, the refractory material of the present application, based on the percentage of the total mass of the matrix part of said refractory material, in the matrix part:
The phase content of corundum is 0-100%, preferably 0-50%; for example 0%, 3%, 5%, 8%, 10%, 12%, 15%, 18%, 20%, 22%, 25%, 27%, 30%, 32%, 35%, 40%, 45%, 50%, 55%, 60%, 65%, 70%, 75%, 80%, 85%, 90%, 95%, 100%etc.;
the phase content of CA6 is 0-100%, preferably 25-100%, e.g., 0%, 3%, 5%, 8%, 10%, 12%, 15%, 18%, 20%, 22%, 25%, 27%, 30%, 32%, 35%, 40%, 45%, 50%, 55%, 60%, 65%, 70%, 75%, 80%, 85%, 90%, 95%, 100%etc.; and
the phase content of ZrO₂ is 0-50%, preferably 0-25%; for example 0%, 3%, 5%, 8%, 10%, 12%, 15%, 18%, 20%, 22%, 25%, 27%, 30%, 32%, 35%, 40%, 45%, 50%, etc..

In a specific embodiment, based on the percentage of the total mass of the matrix part of said refractory material, the chemical composition of the matrix part of the refractory material of the present application comprises:
45.8%-100% of Al₂O₃, preferably 68.7%-95.8% of Al₂O₃; for example 45.8%, 50%, 55%, 60%, 65%, 70%, 75%, 80%, 85%, 90%, 95%, 100%, etc.;
0-8.4 of CaO, preferably 2.1%-8.4% of CaO; for example 0, 0.5%, 1%, 1.5%, 2%, 2.5%, 3%, 3.5%, 4%, 4.5%, 5%, 5.5%, 6%, 6.5%, 7%, 7.5%, 8%, 8.4%, etc.; and
0-50% of ZrO₂, preferably from 0 to 25% ZrO₂, for example, 0%, 3%, 5%, 8%, 10%, 12%, 15%, 18%, 20%, 22%, 25%, 27%, 30%, 32%, 35%, 40%, 45%, 50% etc..

When the granular material for the preparation of the refractory material is CMA granular material, or CMA granular material and CA6 granular material, the fine powder comprises one or two or three of CA6 fine powder, CMA fine powder, and Al₂O₃-containing fine powder.

In a specific embodiment, the phase of the refractory material of this application comprises CMA.

In a specific embodiment, the refractory material of this application comprises one or two of corundum and CA6, and CMA.

In a specific embodiment, the fine powder further comprises ZrO₂ fine powder, and the phase of the refractory material in the application further comprises ZrO₂.

In a specific embodiment, the refractory material of the present application, based on the percentage of the total mass of the refractory material,
the phase content of CMA is 30-100%, preferably 55-100%, for example 30%, 35%, 40%, 45%, 50%, 55%, 60%, 65%, 70%, 75%, 80%, 85%, 90%, 95%, 100% etc.;

When CM2A8 is used as aggregate and fine powder, its content is preferably 0-80%.
the phase content of CA6 is 0-70%, preferably 0-60%, for example 0%, 5%, 10%, 15%, 20%, 25%, 30%, 35%, 40%, 45%, 50%, 55%, 60%, 65%, 70% etc.;
the phase content of corundum is 0-70%, preferably 0-30%, for example 0%, 5%, 10%, 15%, 20%, 25%, 30%, 35%, 40%, 45%, 50%, 55%, 60%, 65%, 70% etc.; and
the phase content of ZrO₂ is 0-35%, preferably 0-15%, for example 0%, 3%, 5%, 8%, 10%, 12%, 15%, 18%, 20%, 22%, 25%, 27%, 30%, 32%, 35% etc..

In a specific embodiment, the refractory material of the present application, based on the percentage of the total mass of the refractory material, the chemical composition of the refractory material comprises:
55.72%-96.43% of Al₂O₃, preferably 72.86%-92.72% of Al₂O₃, for example 55.72%, 60%, 62%, 65%, 67%, 70%, 73%, 75%, 77%, 80%, 83%, 85%, 90%, 92%, 95.24%, 96.43% etc.;
1.76%-7.95% of CaO, preferably 3.23%-7.80% of CaO, for example 1.76%, 2%, 2.5%, 3%, 3.5%, 4%, 4.5%, 5%, 5.5%, 6%, 6.5%, 7%, 7.5%, 7.95% etc.;
1.48%-8.4% of MgO, preferably 1.98%-6.72% of MgO, for example 1.48%, 2%, 2.5%, 3%, 3.5%, 4%, 4.5%, 5%, 5.5%, 6%, 6.5%, 7%, 7.5%, 8%, 8.4% etc.; and
0-35% of ZrO₂, preferably 0-15% of ZrO₂, for example 0%, 3%, 5%, 8%, 10%, 12%, 15%, 18%, 20%, 22%, 25%, 27%, 30%, 32%, 35% etc..

In a specific embodiment, the refractory material of the present application, the phase of the matrix part of said refractory material comprises one or two or three of corundum, CA6, and CMA.

In a specific embodiment, the refractory material of the present application, the phase of the matrix part of said refractory material comprises: one or two or three of corundum, CA6 and CMA, and ZrO₂.

In a specific embodiment, the refractory material of the present application, based on the percentage of the total mass of the matrix part of the refractory material, in the matrix part,
the phase content of corundum is 0-100%, preferably 0-50%, for example 0%, 3%, 5%, 8%, 10%, 12%, 15%, 18%, 20%, 22%, 25%, 27%, 30%, 32%, 35%, 40%, 45%, 50%, 55%, 60%, 65%, 70%, 75%, 80%, 85%, 90%, 95%, etc., 95%, 100%, etc.;
the phase content of CA6 is 0-100%, preferably 25%-100%, for example 0%, 3%, 5%, 8%, 10%, 12%, 15%, 18%, 20%, 22%, 25%, 27%, 30%, 32%, 35%, 40%, 45%, 50%, 55%, 60%, 65%, 70%, 75%, 80%, 85%, 90%, 95%, 100%, etc., 90%, 95%, 100%, etc.;
the phase content of CMA is 0-100%, preferably 25%-100%, for example 0%, 3%, 5%, 8%, 10%, 12%, 15%, 18%, 20%, 22%, 25%, 27%, 30%, 32%, 35%, 40%, 45%, 50%, 55%, 60%, 65%, 70%, 75%, 80%, 85%, 90%, 95%, 100%, etc.; and

The phase content of ZrO₂ is 0-50%, preferably 0-25%; for example 0%, 3%, 5%, 8%, 10%, 12%, 15%, 18%, 20%, 22%, 25%, 27%, 30%, 32%, 35%, 40%, 45%, 50%, etc..

In a specific embodiment, the chemical composition of the matrix part of the refractory material of the present application comprises:
42.86%-100% of Al₂O₃, preferably 64.29%-95.8% of Al₂O₃, for example 42.86%, 45%, 50%, 55%, 60%, 65%, 70%, 75%, 80%, 85%, 90%, 95%, 100%, etc.;
0-8.4% of CaO, preferably 1.47%-8.4% of CaO, for example 0%, 0.5%, 1%, 1.5%, 2%, 2.5%, 3%, 3.5%, 4%, 4.5%, 5%, 5.5%, 6%, 6.5%, 7%, 7.5%, 8%, 8.4%, etc.;
0-8.4% of MgO, preferably 0-8.4% of MgO, for example 0%, 0.5%, 1%, 1.5%2%, 2.5%, 3%, 3.5%, 4%, 4.5%, 5%, 5.5%, 6%, 6.5%, 7%, 7.5%, 8%, 8.4%, etc.; and
0-50% of ZrO₂, preferably 0-25% of ZrO₂, for example 0%, 3%, 5%, 8%, 10%, 12%, 15%, 18%, 20%, 22%, 25%, 27%, 30%, 32%, 35%, 40%, 45%, 50%, etc.

The present application also provides a method of preparing a refractory material comprising the steps of:
mixing a granular material and a fine powder to obtain a mixed material , then subjecting the mixed material to hot-pressed sintering to obtain the refractory material.

In a particular embodiment, the preparation method of the present application, the mass ratio of the granular material to the fine powder is 30-65:35-70, preferably 40-65:35-60.

In a specific embodiment, the preparation method of the present application, said fine powder has a particle size of less than 0.088 mm, and the said granular material has a particle size of greater than 0.088 mm, preferably 0.088 to 10 mm.

In a specific embodiment, the preparation method of the present application, said hot-pressed sintering is performed by putting the mixed material into a mold of a high temperature device for hot-pressed sintering or by molding the mixed material at normal temperature, and then putting it into a mold of a high temperature device for hot-pressed sintering or by molding the mixed material at normal temperature, and sintering it at low temperature, and then putting it into a mold of a high temperature device for hot-pressed sintering.

The present application promotes particle rearrangement and particle diffusion with high temperature and high pressure to obtain a refractory material with a low amount of high-temperature liquid phase, a homogeneous organizational structure, and good thermal shock stability performance.

The present application provides a working lining of a ladle for molten steel smelting, comprising the refractory material described above or the refractory material obtained by the preparation method described above.

The present application provides a working lining for molten aluminum smelting and transporting ladles, comprising the refractory material described above or the refractory material obtained by the preparation method described above.

The present application provides a refractory lining for industrial furnaces, comprising the refractory material described above or the refractory material obtained by the preparation method described above.

Based on the high purity, low oxygen potential, high erosion resistance, and potential function of cleaning molten steel of CA6 raw material, the refractory material with high purity, erosion resistance, and the function of cleaning molten steel is prepared without adding any sintering additives and relying on liquid phase sintering" which can give full play to the advantages of high purity raw material erosion resistance and the function of cleaning molten steel; the refractory material with a uniform structure is constructed, which not only solves the structural stress of the refractory material as a whole, but also solves the problems of slag penetration resistance and rapid erosion, and achieves the coordination and unity of penetration resistance and thermal shock stability. This not only gives full play to the advantages of high purity raw materials with good corrosion resistance and the function of CA6 material in cleaning the molten steel, but also takes into account the contradiction between thermal shock stability and slag penetration resistance, and also solves the problem that the refractory materials of ladle working lining are damaged too quickly under harsh refining conditions, reducing the problem of introducing refractory inclusions into steel, and achieving remarkable economic and social economic benefits.

### Examples

In this application, the materials used in the tests and the test methods are described in general and/or specific terms, and in the following examples, unless otherwise specified, % indicates Wt%, which means weight percent. The reagents or instruments used, where no manufacturer is specified, are commercially available conventional reagent products; wherein Table 1 shows the raw materials and sources used in the examples.

**Table 1**

| Raw materials | Main ingredients content | Manufacturers |
|---|---|---|
| CA6 fine powder | Al₂O₃ 90.5∼92.5% | ZiBo City LuZhong Refractory Co., Ltd |
| | CaO 7.4∼9.0% | |
| CA6 granule material | Al₂O₃ 90.5∼92.5% | ZiBo City LuZhong Refractory Co., Ltd |
| | CaO 7.4∼9.0% | |
| γ-Al₂O₃ fine powder | Al₂O₃≥96.0% | Shandong Aluminium Company |
| ρ-Al₂O₃ fine powder | Al₂O₃≥96.0% | Shandong Aluminium Company |
| Industrial alumina fine powder | Al₂O₃≥96.0% | Shandong Aluminium Company |
| Tabular corundum fine powder | Al₂O₃≥97.0% | Anmai Aluminium Industry(Qingdao)Co.,Ltd. |
| White corundum fine powder | Al₂O₃≥96.0% | Zhengzhou Yufa Group |
| 12CaO·Al₂O₃ fine powder | Al₂O₃ 51.0∼52.0% | ZiBo City LuZhong Refractory Co., Ltd |
| | CaO 48.0∼49.0% | |
| Desiliconized zirconium fine powder | ZrO₂+H_{f}O₂≥91% | Shandong Jin Taiyang Zirconium Industry Co., Ltd |
| C2M2A14 granule material | Al₂O₃≥96.0%, CaO≥96.0%, MgO≥4.3% | ZiBo City LuZhong Refractory Co., Ltd |
| Fused zirconia fine powder | ZrO₂+H_{f}O₂≥98.5% | Shandong Jin Taiyang Zirconium Industry Co., Ltd |
| CM2A8 granule material | Al₂O₃≥84%, CaO≥5.0%, MgO≥8.0% | ZiBo City LuZhong Refractory Co., Ltd |
| High purity magnesium sand fine powder | MgO≥96.5% | Yingkou Jiamei Refractories Co., Ltd |
| Quicklime fine powder | CaO≥91.5% | Yingkou Jiamei Refractories Co., Ltd |
| Monoclinic zirconia fine powder | ZrO₂+H_{f}O₂≥98.5% | Shandong Jin Taiyang Zirconium Industry Co., Ltd |

The XRD method was used to analyze the phases of the refractory materials in each example by grinding them to below 325 mesh and then scanning them with an X-ray diffractometer (Bruker: D8ADVANCE). By analyzing the diffraction data and matching it with the standard PDF card, the relevant phase is obtained, and then the content of the relevant phase is obtained by fitting the diffraction data.

The XRF method was used to determine the chemical composition of the refractory materials in each example according to GB/T21114-2007.

The material phase of the matrix part of the refractory material described was analyzed by micro-area diffraction using XRD. In other words, 12 pieces of different refractory material were selected, and 12 specimens were cut out. In each specimen, a region of the matrix with a more homogeneous color and structure is selected for micro-area diffraction. The diffraction pattern is fitted to the full spectrum to determine the content of each phase. 2 data with large deviations are removed, and the phase content of the remaining ten specimens is averaged to give the phase content of the refractory material matrix.

### Example 1

(1) 350g of CA6 fine powder and 650g of CA6 granule material were mixed and stirred evenly to obtain a mixed material, wherein the maximum particle size of granule material is 5 mm, and the bulk density is 3.15 g/cm³.
(2) The mixed material was put into a mold of a high-temperature device for hot-presses sintering. When the maximum temperature was 1650°C, the hot-pressed strength was 3 MPa for 1 hour, a calcium hexaaluminate-based refractory material with the function of cleaning molten steel was prepared.

The resulting refractory material was analyzed by XRD, and based on the percentage of the total mass of the refractory material, the phase content of CA6 in the refractory material was 100%.

The refractory material obtained was analyzed by XRF and said refractory material comprised 91.05% of Al₂O₃ and 8.40% of CaO in terms of the percentage of the total mass of said refractory material.

The phase analysis of the matrix part of said refractory material was determined by micro-area diffraction using XRD, and the phase of the matrix part of the refractory material comprised 100% of CA6.

The chemical composition of the matrix part of said refractory material comprised 91.0% of Al₂O₃ and 8.40% of CaO.

The refractory material obtained was analyzed by the drainage method, and the bulk density of said refractory material was 3.20g/cm³.

### Example 2

(1) 300g of active α-Al₂O₃ fine powder, 36g of CaO·Al₂O₃ fine powder, 200g of white corundum fine powder, 100g of ρ-Al₂O₃ fine powder, and 150g of monoclinic zirconia fine powder were evenly mixed, and then adding 400g of CA6 granular material and stirring well to obtain a mixed material, wherein the maximum particle size of the granular material is 5 mmm, and the bulk density is 3.15g/cm³.
(2) Appropriate water was added into the mixed material, stirring evenly, casting, drying, and then putting into a mold of a high-temperature device for hot-pressed sintering. The pressure was applied when the temperature was raised to 1350°C. The pressure was increased while the temperature was increased. When the maximum temperature was 1730°C, the maximum hot-pressed strength was 15 MPa for 20 minutes, a calcium hexaaluminate based refractory material with the function of cleaning molten steel was prepared.

The refractory material was analyzed by XRD, and the obtained phases were mainly CA6, corundum, and zirconium oxide. Based on the percentage of the total mass of the refractory material, in the the refractory material, the phase content of CA6 was 55%, the phase content of corundum was 28.5%, and the phase content of zirconium oxide was15%.

The refractory material obtained was analyzed by XRF and based on the percentage of the total mass of the refractory material, the refractory material comprised 79.3% of Al₂O₃, 4.4% of CaO, and 15% of ZrO₂.

The physical phase analysis of the matrix part of said refractory material was determined by micro-area diffraction using XRD, and the physical phase of the matrix part of said refractory material comprised mainly 24.0% of CA6, 47.5% of corundum and 25% of zirconium oxide.

The chemical composition of the matrix part of said refractory material comprised 71.7% of Al₂O₃, 1.98% of CaO, and 25% of ZrO₂.

The bulk density of the refractory material was determined to be 3.25 g/cm³.

### Example 3

(1) 300g of CA6 fine powder, 200g of sintered corundum fine powder and 153g of aluminum hydroxide fine powder were evenly mixed, and then adding 400g of CA6 granular material and stirring well to obtain a mixed material, wherein the maximum particle size of the granular material is 3mm, and the bulk density is 2.90g/cm³
(2) The mixed material was put in a mold of a high-temperature device and heated up while applying pressure until the temperature rises to a maximum of 1680°C and the maximum hot-pressing strength is 2 MPa to produce a calcium hexaaluminate-based refractory material with clean steel.

The refractory material was analyzed by XRD, and the physical phases were mainly CA6 and corundum. Based on the percentage of the total mass of the refractory material, in said refractory material, the phase content of CA6 was 68.6% and the phase content of corundum was 30%.

The resulting refractory material was analyzed by XRF, and based on the percentage of the total mass of said refractory material, said refractory material comprised 94.12% of Al₂O₃ and 5.0% of CaO.

The physical phase analysis of the matrix part of said refractory material was determined by micro-area diffraction using XRD, and the physical phase of the matrix part of said refractory material mainly comprised 48.5% of CA6 and 50% of corundum.

The chemical composition of the matrix part of the refractory material comprised 95.8% of Al₂O₃ and 4.05% of CaO.

The bulk density of the refractory material was determined to be 2.95 g/cm³.

### Example 4

(1) 400g of CM2A8 fine powder and 100g of desiliconized zirconia fine powder were evenly mixed, and then adding 100g of CA6 granular material, 300g of C2M2A14 granular material, and 100g of CM2A8 granular material and stirring well to obtain a mixed material, wherein the maximum particle size of the granular material is 5 mm, and the bulk density is 2.98g/cm³.
(2) The mixed material was put into a mold of a high-temperature device for hot-pressed sintering. The maximum temperature was 1720°C and the pressure was applied at this temperature. When the hot-pressed strength was 6 MPa, a calcium hexaaluminate based refractory material with the function of cleaning molten steel was prepared.

The resulting refractory material was analyzed by XRD, and the phases obtained were mainly corundum and CM2A8. Based on the percentage of the total mass of the refractory material, in said refractory material, the phase content of CA6 was 9.71% , the phase content of C2M2A14 was 28.4%, the phase content of CM2A8 was 49.9% , and the phase content of zirconia was 9.46%.

The resulting refractory material was analyzed by XRF and based on percentage of the total mass of said refractory material, said refractory material comprised 77.5% of Al₂O₃, 5.43% of MgO, 5.68% of CaO, and 9.45% of ZrO₂.

The physical phase analysis of the matrix part of said refractory material was determined by micro-area diffraction using XRD, and the physical phase of the matrix part of said refractory material mainly comprised CM2A8 with a phase content of 80% and zirconium oxide with a phase content of 18.7%.

The chemical composition of the matrix part of said refractory material comprised 67.9% of Al₂O₃, 6.72% of MgO, 4.05% of CaO, and 18.9% of ZrO₂.

The bulk density of the refractory material was determined to be 3.20g/cm³.

### Example 5

(1) 200g of CM2A8 fine powder, 100g of industrial alumina fine powder, and 100g of tetragonal zirconia fine powder were evenly mixed, and then adding 600g of CM2A8 granular material and stirring well to obtain a mixed material, where the maximum particle size of the granular material is 3mm, and the bulk density is 3.0g/cm³.
(2) The mixed material was put into a mold of a high-temperature device for hot-pressed sintering. The maximum temperature was 1710 and the pressure was applied at this temperature. When the hot-pressed strength was 4 MPa, a calcium hexaaluminate based refractory material with the function of cleaning molten steel was prepared.

The refractory material was analyzed by XRD, and the obtained phases were mainly corundum and CM2A8. Based on the percentage of the total mass of the refractory material, in said refractory material, the phase content of corundum was 9.48%, the phase content of CM2A8 was 80.0% and the phase content of zirconium oxide was 9.72%.

The refractory material obtained was analyzed by XRF and based on the percentage of the total mass of said refractory material, the refractory material comprised 78.0% of Al₂O₃, 6.72% of MgO, 4.3% of CaO, and 9.6% of ZrO₂.

The physical phase analysis of the matrix part of said refractory material was determined by micro-area diffraction using XRD, and the physical phase of the matrix part of said refractory material mainly comprised 50% of CM2A8, 25% of corundum, and 25% of zirconium oxide.

The chemical composition of the matrix part of said refractory material comprised 66.3% of Al₂O₃, 4.20% of MgO, 2.84% of CaO, and 25% of ZrO₂.

The bulk density of the refractory material obtained was determined to be 3.10g/cm³.

### Example 6

(1) 450g of CM2A8 fine powder and 150g of fused zirconium oxide fine powder were evenly mixed, and then adding 400g of CM2A8 granular material and stirring well to obtain a mixed material, wherein the maximum particle size of the granular material is 5 mm and the bulk density is 3.0g/cm³.
(2) The mixed material was put in a mold of a high-temperature device for hot-pressed sintering. The maximum temperature was 1740°C and the pressure was applied at this temperature. When the hot-pressed strength was 1MPa, a calcium hexaaluminate based refractory material with the function of cleaning molten steel was prepared.

The refractory material was analyzed by XRD, and the obtained phases were mainly CM2A8 and zirconium oxide. Based on the percentage of the total mass of the refractory material, in said refractory material, the phase content of CM2A8 was 83.8% and the phase content of zirconium oxide was 15%.

The resulting refractory material was analyzed by XRF and, and based on the percentage of the total mass of said refractory material, said refractory material comprised 72.86% of Al₂O₃, 6.89% of MgO, 4.63% of CaO, and 15% of ZrO₂.

The physical phase analysis of the matrix part of said refractory material was determined by micro-area diffraction using XRD, and the physical phase of the matrix part of said refractory material mainly comprised 73.89% of CM2A8 with a phase content of 73.89% and zirconium oxide with a phase content of 25%.

The chemical composition of the matrix part of the refractory material comprised 64.29% Al₂O₃, 6.0% MgO, 4.05% CaO, and 25% ZrO₂.

The bulk density of the refractory material was determined to be 3.15g/cm³

### Example 7

(1) 150g of CM2A8 fine powder, 200g of sintered corundum fine powder, 102g of ρ-Al₂O₃ fine powder, and 150g of monoclinic zirconia fine powder were evenly mixed, and then adding 400g of CM2A8 granular material and stirring well to obtain a mixed material, wherein the maximum particle size of the granular material is 5 mm, and the bulk density is 3.25g/cm³.
(2) The mixed material was put into a mold of a high-temperature device hot-pressed sintering. The maximum temperature was 1760°C and the presseure was applied at this temperature. When the hot-pressed strength was 7MPa, a calcium hexaaluminate based refractory material with the function of cleaning molten steel was prepared.

The refractory material was analyzed by XRD, and the phases were mainly corundum and CM2A8. Based on the percentage of the total mass of the refractory material, in said refractory material, the phase content of CM2A8 was 55%, the phase content of corundum was 30%, and the phase content of zirconium oxide was 14.3%.

The resulting refractory material was analyzed by XRF and, based on the percentage of the total mass of said refractory material, said refractory material comprised 76.1% of Al₂O₃, 4.52% of MgO, 3.2% of CaO, and 14.5% of ZrO₂.

The physical phase analysis of the matrix part of said refractory material was determined by micro-area diffraction using XRD, and the physical phase of the matrix part of said refractory material mainly comprised corundum with a phase content of 50%, CM2A8 with a phase content of 28% and zirconium oxide with a phase content of 23.8%.

The chemical composition of the matrix part of the refractory material comprised 70.2% of Al₂O₃, 1.98% of MgO, 1.47% of CaO, and 24.2% of ZrO₂.

The bulk density of the refractory material obtained was determined to be 3.28g/cm³.

### Example 8

(1) 350g of CM2A8 fine powder and 350g of fused zirconium oxide fine powder were evenly mixed, and then adding 300g of CM2A8 granular material and stirring well to obtain a mixed material, wherein the maximum particle size of the granular material is 10mm, and the bulk density is 3.56g/cm³.
(2) The mixed material was put into a mold of a high-temperature device for hot-pressed sintering. The maximum temperature was 1550°C and the pressure was applied at this temperature. When the hot-pressed strength was 30MPa, a calcium hexaaluminate based refractory material with the function of cleaning molten steel was prepared.

The resulting refractory material was analyzed by XRD, and the phases obtained were mainly corundum and CM2A8. Based on the percentage of the total mass of the refractory material, in said refractory material, the phase content of CM2A8 was 63.7% and the phase content of zirconium oxide was 35%.

The resulting refractory material was analyzed by XRF and based on the percentage of the total mass of said refractory material, said refractory material comprised 55.72% of Al₂O₃, 5.28% of MgO, 3.63% of CaO, and 35% of ZrO₂.

The physical phase analysis of the matrix part of said refractory material was determined by micro-area diffraction using XRD, and the physical phase of the matrix part of said refractory material mainly comprised CM2A8 with a phase content of 48.6% and zirconium oxide with a phase content of 50%.

The chemical composition of the matrix part of said refractory material comprised 41.5% of Al₂O₃, 3.98% of MgO, 2.75% of CaO, and 50% of ZrO₂.

The bulk density of the refractory material was determined to be 3.65g/cm³.

### Example 9

(1) 300g of C2M2A14 fine powder, 178g ofγ-Al₂O₃ fine powder, 14g of fused magnesium oxide fine powder, 18g of limestone fine powder, and 500g of C2M2A14 granular material were mixed and stirred evenly to obtain a mixed material, wherein the maximum particle size of the granular material is 5mm.
(2) The mixed material was molded at normal temperature, drying, treating at 1500°C and then putting into a mold of a high-temperature device for hot-pressed sintering. The pressure was applied from the time the temperature was rasied to 1550°C. The pressure was increased while the temperature was increased. When the temperature was heated up to 1800°C and the maximum hot-pressed strength was 8 MPa, a calcium hexaaluminate based refractory material with the function of cleaning molten steel was prepared.

The resulting refractory material was analyzed by XRD, and the obtained phase was mainly C2M2A14, and based on the percentage of the total mass of the refractory material, the phase content of CM2A14 in the refractory material was 100%.

The resulting refractory material was analyzed by XRF, and based on the percentage of the total mass of the refractory material, said refractory material comprised 87.7% of Al₂O₃, 4.02% of MgO, and 6.29% of CaO.

The physical phase analysis of the matrix part of said refractory material was determined by micro-area diffraction using XRD, and the physical phase of the matrix part of said refractory material mainly comprised C2M2A14 with a phase content of 100%.

The chemical composition of the matrix part of the refractory material comprises 87.65% of Al₂O₃, 4.13% of MgO, and 6.37% of CaO.

The refractory material obtained was analyzed by the drainage method, and the bulk density of said refractory material was 3.55 g/cm³.

### Example 10

(1) 500g of CM2A8 fine powder, 264g of aluminum hydroxide fine powder, 16.5g of calcium hydroxide fine powder, 25g of magnesium hydroxide fine powder, and 300g of CM2A8 granular material were mixed and stirred evenly to obtain a mixed material, wherein the maximum particle size of the granular material is 8mm.
(2) The mixed material was molded at normal temperature, then putting into a mold of a high-temperature device for hot-pressed sintering. After the temperature was raised to 1450°C, the pressure was applied. The pressure was increased while the temperature was increased. When the temperature was heated up to 1750°C, and the maximum hot-pressed strength was 10MPa, a calcium hexaaluminate based refractory material with the function of cleaning molten steel was prepared.

The resulting refractory material was analyzed by XRD and the obtained phase was mainly CM2A8, and based on the percentage of the total mass of the refractory material, the phase content of CM2A8 in the refractory material was 100% in terms of.

The refractory material obtained was analyzed by XRF and based on the percentage of the total mass of the refractory material, the refractory material comprised 85.24% of Al₂O₃, 8.40% of MgO, and 5.58% of CaO.

The physical phase analysis of the matrix part of said refractory material was determined by micro-area diffraction using XRD to obtain a CM2A8 phase content of 100% in the matrix part of said refractory material.

The chemical composition of the matrix part of the refractory material comprised 85.12% of Al₂O₃, 8.40% of MgO, and 5.67% of CaO.

The refractory material obtained was analyzed by the drainage method, and the bulk density of said refractory material was3.41g/cm³.

### Example 11

(1) 700g of tabular corundum fine powder and 300g of CA6 granule material were mixed and stirred evenly to obtain a mixed material, wherein the maximum particle size of the granule material is 3 mm, and the bulk density is 2.90g/cm³;
(2) The mixed material was put in a mold of a high-temperature device for hot-pressed sintering. The maximum temperature was 1780°C and the pressure was applied at this temperature. When the hot-pressed strength was 0.5MPa, a calcium hexaaluminate based refractory material with the function of cleaning molten steel was prepared.

The refractory material was analyzed by XRD, and the obtained phases were mainly corundum and CA6. Based on the percentage of the total mass of the refractory material, in the refractory material, the phase content of corundum was 70% and the phase content of CA6 was 28.2% CA6.

The refractory material obtained was analyzed by XRF and based on the percentage of the total mass of the refractory material, the refractory material comprised 97.48% of Al₂O₃ and 2.38% of CaO.

The physical phase analysis of the matrix part of said refractory material was determined by XRD using micro-area diffraction to obtain a corundum phase content of 100% in the matrix part of said refractory material.

The chemical composition of the matrix part of the refractory material was 100% of Al₂O₃.

The bulk density of the refractory was determined to be 3.0g/cm³.

### Example 12

(1) 400g of tabular corundum fine powder, 200g of industrial alumina fine powder, 100g of α-Al₂O₃ fine powder, and 300g of CM2A8 granule material were mixed and stirred evenly to obtain a mixed material, wherein the maximum particle size of the granule material is 1 mm and the bulk density is 3.04 g/cm³.
(2) The mixed material was put in a mold of a high-temperature device for hot-pressed sintering. The maximum temperature was 1600°C and the pressure was applied at this temperature. When the hot-pressed strength was 20MPa, a calcium hexaaluminate based refractory material with the function of cleaning molten steel was prepared.

The refractory material was analyzed by XRD, and theobtained phases were mainly corundum and CM2A8. Based on the percentage of the total mass of the refractory material, in the refractory material, the phase content of corundum was 68.35% and the phase content of CM2A8 was 28.9%.

The resulting refractory material was analyzed by XRF and based on the percentage of the total mass of the refractory material, the refractory material comprised 94.67% of Al₂O₃, 2.41% of MgO, and 1.76% of CaO.

The physical phase analysis of the matrix part of said refractory material was determined by micro-area diffraction using XRD to obtain a corundum phase content of 97.64% in the matrix part of said refractory material.

The chemical composition of the matrix part of the refractory material comprised 98.85% of Al₂O₃.

The bulk density of the refractory material was determined to be 2.90g/cm³.

### Example 13

(1) 500g of CM2A8 fine powder, 264g of aluminum hydroxide fine powder, 16.5g of calcium hydroxide fine powder, 25g of magnesium hydroxide fine powder, and 300g of CM2A8 granular material were mixed and stirred evenly to obtain a mixed material, wherein the maximum particle size of the granular material is 8mm, and the bulk density is 2.95g/cm³.
(2) The mixed material was molded at normal temperature, drying, treating at 1500°Cand then putting into a mold of a high-temperature device for hot-pressed sintering. And when the temperature was raised to 1650°C, the hot-pressed strength of 2MPa was applied to prepared a calcium hexaaluminate based refractory with the function of cleaning molten steel.

The refractory material was analyzed by XRD, and the obtained phases were mainly CM2A8 and CA6. Based on the percentage of the total mass of the refractory material, in the refractory material, the phase content of CM2A8 was 80%, the phase content of CA6 was 3.7%, the phase content of corundum was 6.3%, and the sum of these three phases was 90%. The remaining phases were CA2 and MA, wherein the phase content of CA2 was 3.85%, and the phase content of MA was 5.78%.

The refractory material obtained was analyzed by XRF and based on percentage of the total mass of the refractory material, the refractory material comprised 85.32% of Al₂O₃, 8.38% of MgO, and 5.53% of CaO.

The physical phase analysis of the matrix part of said refractory was determined by micro-area diffraction using XRD and in the matrix part of said refractory material, the phase content of CM2A8 was 71.4%, the phase content of CA6 was 5.28%, the phase content of corundum was 9.0% , the phase content of CA2 was 5.5% and the phase content of MA was 8.26%.

The chemical composition of the matrix part of said refractory material comprised 85.15% of Al₂O₃, 8.37% of MgO, and 5.71% of CaO.

The refractory material obtained was analyzed by the drainage method, and the bulk density of said refractory material was 2.92 g/cm³.

### Example 14

(1) 350g of CA6 fine powder, 94g of activated alumina powder, 8.75g of CaO, and 158g of desiliconized zirconia fine powder were evenly mixed, and then adding 400g of CA6 granular material and stirring well to obtain a mixed material, wherein the maximum particle size of the granular material is 5mm.
(2) The mixed material was put into a mold of a high-temperature device for hot-pressed sintering. When the temperature was raised to 1550°C, the pressure was applied. When the pressure was increased while the temperature was raised to a maximum of 1640°C and the hot-pressed strength was 12MPa, a calcium hexaaluminate based refractory material with the function of cleaning molten steel was prepared.

The refractory material was analyzed by XRD, and the obtained phases were mainly CA6 and zirconium oxide. Based on the percentage of the total mass of the refractory material, the phase content of CA6 was 81.2% of CA6 and the phase content of zirconium oxide was 15%.

The refractory material obtained was analyzed by XRF and based on the percentage of the total mass of the refractory material, the refractory material comprised 75.58% of Al₂O₃, 6.75% of CaO, and 15% of ZrO₂.

The physical phase analysis of the matrix part of said refractory material was determined by XRD using micro-area diffraction, and the physical phase of the matrix part of said refractory material mainly comprised 73.1% of CA6 phase content and 25% of zirconium oxide phase content.

The chemical composition of the matrix part of the refractory material comprised 67.46% of Al₂O₃, 6.02% of CaO, and 25% of ZrO₂.

The bulk density of the refractory material was determined to be 3.20g/cm³.

### Example 2-1

(1) 116.5g of active α-Al₂O₃ fine powder, 36.7g of CaO·Al₂O₃ fine powder, 205g of white corundum fine powder, 105g of ρ-Al₂O₃ fine powder, and 152g of monoclinic zirconia fine powder were evenly mixed, and then adding 400g of CA6 granular material and stirring well to obtain a mixed material, wherein the maximum particle size of the granular material is 5mm.
(2) Appropriate water was added into the mixed material, stirring evenly, casting, drying, and putting it into a mold of a high-temperature device for hot-pressed sintering. The pressure was applied when the temperature was raised to 1350°C. The pressure was increased while the temperature was increased. When the maximum temperature was 1700°C, and the maximum hot-pressed strength was 15MPa for 20 minutes, a calcium hexaaluminate based refractory material with the function of cleaning molten steel was prepared.

The refractory material was analyzed by XRD, and the obtained phases were mainly CA6, corundum, and zirconium oxide. Based on the percentage of the total mass of the refractory material, the phase content of CA6 was 52.5%, the phase content of corundum was 29.3%, and the phase content of zirconium oxide was 14.8%.

The resulting refractory material was analyzed by XRF and based on the percentage of the total mass of the refractory material, the refractory material comprised 79.12% of Al₂O₃, 4.16% of CaO, and 14.2% of ZrO₂.

The physical phase analysis of the matrix part of said refractory material was determined by XRD using micro-area diffraction, and the physical phase of the matrix part of said refractory material mainly comprised 22.5% of CA6, 48.9% of corundum and 24.67% of zirconium oxide.

The chemical composition of the matrix part of said refractory material comprised 71.08% of Al₂O₃, 2.0% of CaO, and 23.71% of ZrO₂.

The bulk density of the refractory material was determined to be 3.20g/cm³.

### Example 3-1

(1) 300g of CA6 fine powder, 205g of sintered corundum fine powder, and 157.7g of aluminum hydroxide fine powder were evenly mixed, and then adding 400g of CA6 granular material and stirring well to obtain a mixed material, wherein the maximum particle size of the granular material is 3mm.
(2) The mixed material was put into a mold of a high-temperature device for heating. When the temperature was up to 1550°C and the maximum hot-pressed strength was 30MPa, a calcium hexaaluminate based refractory material with the function of cleaning molten steel was prepared.

The refractory material was analyzed by XRD, and the physical phases were mainly CA6 and corundum. Based on the percentage of the total mass of the refractory material, the phase content of CA6 was 68.28% of and the phase content of corundum was 30%.

The resulting refractory material was analyzed by XRF and based on the percentage of the total mass of the refractory material, the refractory material comprised 94.10% of Al₂O₃ and 5.62% of CaO.

The physical phase analysis of the matrix part of said refractory material was determined by XRD using micro-area diffraction, and the physical phase of the matrix part of said refractory material mainly comprised 47.6% of CA6 and 50% of corundum.

The chemical composition of the matrix part of said refractory comprising 95.8% of Al₂O₃and 4.12% of CaO;

The bulk density of the refractory material obtained was determined to be 3.20g/cm³.

### Example 6-1

(1) 450g of CM2A8 fine powder and 150g of fused zirconia fine powder were evenly mixed, then adding 400g of CM2A8 granular material and stirring well to obtain a mixed material, wherein the maximum particle size of the granular material is 5mm.
(2) The mixed material was put into a mold of a high-temperature device for hot-pressed sintering. The pressure was applied when the temperature was risen to 1450°C. Increasing the pressure while the temperature was increased, when the maximum temperature was 1760°C, the hot-pressed strength was 2MPa, a calcium hexaaluminate refractory material with the function of cleaning molten steel was prepared.

The refractory material was analyzed by XRD, and the obtained phases were mainly CM2A8 and zirconium oxide. Based on the percentage of the total mass of the refractory material, the phase content of CM2A8 was 82.5% and the phase content of zirconium oxide was 15% .

The resulting refractory material was analyzed by XRF and based on the percentage of the total mass of the refractory material, the refractory material comprised 71.06% of Al₂O₃, 6.54% of MgO, 4.63% of CaO, and 15% of ZrO₂.

The physical phase analysis of the matrix part of said refractory material was determined by micro-area diffraction using XRD, and the physical phase of the matrix part of said refractory material mainly comprised 73.89% of CM2A8 phase and 25% of zirconium oxide phase.

The chemical composition of the matrix part of the refractory material comprised 63.15% of Al₂O₃, 6.13% of MgO, 4.25% of CaO, and 25% of ZrO₂.

The bulk density of the refractory material was determined to be 3.20g/cm³.

### Example 7-1

(1) 150g of CM2A8 fine powder, 205g of sintered corundum fine powder, 105g of ρ-Al₂O₃ fine powder, and 152g of monoclinic zirconia fine powder were evenly mixed, and then adding 400g of CM2A8 granular material and mixing well to obtain a mixed material, wherein the maximum particle size of the granular material is 5mm.
(2) The mixed material was put into a mold of a high-temperature device for hot-pressed sintering at a maximum temperature of 1700°C. The pressure is applied at this temperature with a hot-pressed strength of 7 MPa, and a calcium hexaaluminate based refractory material with the function of cleaning molten steel was prepared.

The refractory material was analyzed by XRD, and the obtained phases were mainly corundum, CM2A8, and zirconium oxide. Based on the percentage of the total mass of the refractory material, the phase content of CM2A8 was 52.5%, the phase content of corundum was 30% and the phase content of zirconium oxide was 14.43%.

The refractory material obtained was analyzed by XRF and based on percentage of the total mass of the refractory material, the refractory material comprised 75.23% of Al₂O₃, 4.18% of MgO, 3.05% of CaO, and 14.48% of ZrO₂.

The physical analysis of the matrix part of said refractory material was determined by micro-area diffraction using XRD, and the physical phase of the matrix part of said refractory mainly comprised 50% of corundum phase content, 23.5% of CM2A8 phase content and 24.5% of zirconium oxide phase content.

The chemical composition of the matrix part of the refractory material comprised 69.6% of Al₂O₃, 2.0% of MgO, 1.35% of CaO, and 24.2% of ZrO₂.

The bulk density of the refractory material was determined to be 3.20g/cm³.

### Example 8-1

(1) 350g of CM2A8 fine powder and 350g of fused zirconia fine powder were evenly mixed, and then adding 300g of CM2A8 granular material and stirring well to obtain a mixed material, wherein the maximum particle size of the granular material is 10mm.
(2) The mixed material was put into a mold of a high-temperature device for hot-pressed sintering at a maximum temperature of 1700°C. The pressure was applied at this temperature with a hot- pressed strength of 4MPa, and a calcium hexaaluminate based refractory material with the function of cleaning molten steel was prepared.

The refractory material was analyzed by XRD, and the obtained phases were mainly corundum and CM2A8. Based on the percentage of the total mass of the refractory material, the phase content of CM2A8 was 62.5% and the phase content of zirconium oxide was 35%.

The resulting refractory material was analyzed by XRF and based on percentage of the total mass of the refractory material, the refractory material comprised 53.20% of Al₂O₃, 5.09% of MgO, 3.49% of CaO, and 35% of ZrO₂.

The physical phase analysis of the matrix part of the refractory material was determined by micro-area diffraction using XRD, and the phase of matrix part of the refractory material mainly comprised 48.7% of CM2A8 phase content and 50% of zirconium oxide phase content.

The chemical composition of the matrix part of the refractory material comprised 41.2% of Al₂O₃, 4.02% of MgO, 2.71% of CaO, and 50% of ZrO₂.

The bulk density of the refractory material was determined to be 3.20g/cm³.

### Example 11-1

(1) 718g of tabular corundum fine powder and 300g of CA6 granule material were mixed and stirred evenly to obtain a mixed material, wherein the maximum particle size of the granule material is 3mm.
(2) The mixed material was put into a mold of a high temperature device for hot-pressed sintering. The maximum temperature was 1680°C and the pressure was applied at this temperature. When the hot-pressed strength was 6MPa, a calcium hexaaluminate based refractory material with the function of cleaning molten steel was prepared.

The refractory material was analyzed by XRD, and the obtained phases were mainly corundum and CA6. Based on the percentage of the total mass of the refractory material, in the refractory material, the phase content of corundum was 70% and the phase content of CA6 was 29.4%.

The refractory material obtained was analyzed by XRF and based on the percentage of the total mass of the refractory material, the refractory material comprised 97.13% of Al₂O₃ and 2.38% of CaO.

The physical phase analysis of the matrix part of said refractory material was determined by micro-area diffraction using XRD to obtain a corundum phase content of 100% in the matrix part of said refractory material.

The chemical composition of the matrix part of the refractory was 99.5% of Al₂O₃.

The bulk density of the refractory material was determined to be 3.20g/cm³.

### Example 12-1

(1) 710g of tabular corundum fine powder and 300g of CM2A8 granular material were mixed and stirred evenly to obtain a mixed material, wherein the maximum particle size of the granular material is 1mm and the bulk density is 3.04g/cm³.
(2) The mixed material was molded at normal temperature, then putting into a mold of a high-temperature device for hot-pressed sintering, increasing the pressure while the temperature was increased. When the temperature was heated up to 1750°C, and the maximum hot-pressed strength was 3.5 MPa, a calcium hexaaluminate refractory material with the function of cleaning molten steel was prepared.

The refractory material was analyzed by XRD, and the obtained phases were mainly corundum and CM2A8. Based on the percentage of the total mass of the refractory material, the phase content of corundum was 70%, and the phase content of CM2A8 was 28.1%.

The refractory material obtained was analyzed by XRF and based on the percentage of the total mass of the refractory material, the refractory material comprised 94.67% of Al₂O₃, 2.36% of MgO, and 1.60% of CaO.

The physical phase analysis of the matrix part of said refractory material was determined by micro-area diffraction using XRD, and the phase content of corundum in the matrix part of said refractory material was 100%.

The chemical composition of the matrix part of the refractory material comprised 99.5% of Al₂O₃.

The bulk density of the refractory material was determined to be 3.35g/cm³.

**Table 2 Physical phases, chemical composition and bulk density of examples and comparative example**

| | Mass ratio of the granule material to the fine powder | Phase composition and content | Chemical composition and content | Bulk density (g/cm³) |
|---|---|---|---|---|
| Example 1 | 65:35 | CA6: 100% | 91.05%Al₂O₃ | 3.20 |
| | | | 8.40%CaO | |
| Example 2 | 40:60 | CA6: 55% | 79.3% Al₂O₃ | 3.25 |
| | | Corundum: 28.5% | 4.40%CaO | |
| | | ZrO₂:15% | 15.0%ZrO₂ | |
| Example 3 | 40:60 | CA6: 68.6% | 94.12%Al₂O₃ | 2.95 |
| | | Corundum: 30% | 5.0%CaO | |
| Example 4 | 50:50 | CA6:9.71% | 77.5%Al₂O₃ | 3.20 |
| | | C2M2A14: 28.4% | 5.68%CaO | |
| | | CM2A8: 49.9% | 5.43%MgO | |
| | | ZrO₂: 9.46% | 9.45%ZrO₂ | |
| Example 5 | 60:40 | CM2A8: 80% | 78.0%Al₂O₃ | 3.10 |
| | | | 4.30%CaO | |
| | | Corundum: 9.48% | 6.72%MgO | |
| | | ZrO₂: 9.72% | 9.60%ZrO₂ | |
| Example 6 | 40:60 | CM2A8: 83.8% | 72.86%Al₂O₃ | 3.15 |
| | | | 4.63%CaO | |
| | | ZrO₂: 15% | 6.89%MgO | |
| | | | 15%ZrO₂ | |
| Example 7 | 40:60 | CM2A8: 55% | 76.1%Al₂O₃ | 3.28 |
| | | Corundum: 30% | 3.20%CaO | |
| | | ZrO₂: 14.3% | 4.52%MgO | |
| | | | 14.5% ZrO₂ | |
| Example 8 | 30:70 | CM2A8: 63.7% | 55.72%Al₂O₃ | 3.65 |
| | | ZrO₂: 35% | 3.63%CaO | |
| | | | 5.28%MgO | |
| | | | 35%ZrO₂ | |
| Example 9 | 50:50 | C2M2A14: 100% | 87.7%Al₂O₃ | 3.55 |
| | | | 6.29 %CaO | |
| | | | 4.02%MgO | |
| Example 10 | 30:70 | CM2A8: 100% | 85.24%Al₂O₃ | 3.41 |
| | | | 5.58%CaO | |
| | | | 8.40%MgO | |
| Example 11 | 30:70 | CA6: 28.2% | 97.48%Al₂O₃ | 3.0 |
| | | Corundum: 70% | 2.38%CaO | |
| Example 12 | 30:70 | CM2A8: 28.9% | 94.67%Al₂O₃ | 2.90 |
| | | Corundum: 68.35% | 2.41 %MgO | |
| | | | 1.76% CaO | |
| Example 13 | 30:70 | CM2A8: 80% | 85.32%Al₂O₃ | 2.92 |
| | | Corundum: 6.3% | | |
| | | CA6: 3.7% | 8.38%MgO | |
| | | CA2: 3.85% | 5.53%CaO | |
| | | MA: 5.78% | | |
| Example 14 | 40:60 | CA6: 81.2% | 75.58%Al₂O₃ | 3.20 |
| | | | 6.75%CaO | |
| | | ZrO₂: 15% | 15%ZrO₂ | |
| Example 2-1 | 40:60 | CA6: 52.5% | 79.12%Al₂O₃ | 3.20 |
| | | Corundum: 29.3% | 4.16%CaO | |
| | | ZrO₂: 14.8% | 14.2%ZrO₂ | |
| Example 3-1 | 40:60 | CA6: 68.28% | 94.10%Al₂O₃ | 3.20 |
| | | Corundum: 30% | 5.62%CaO | |
| Example 6-1 | 40:60 | CM2A8: 82.5% | 71.06%Al₂O₃ | 3.20 |
| | | | 6.54%MgO | |
| | | ZrO₂: 15% | 4.63%CaO | |
| | | | 15%ZrO₂ | |
| Example 7-1 | 40:60 | CM2A8 52.5% | 75.23%Al₂O₃ | 3.20 |
| | | Corundum: 30% | 4.18%MgO | |
| | | ZrO₂: 14.43% | 3.05%CaO | |
| | | | 14.48%ZrO₂ | |
| Example 8-1 | 30:70 | CM2A8: 62.5% | 53.20%Al₂O₃ | 3.20 |
| | | | 5.09%MgO | |
| | | ZrO₂: 35% | 3.49%CaO | |
| | | | 35%ZrO₂ | |
| Example 11-1 | 30:70 | Corundum: 70% | 97.13%Al₂O₃ | 3.20 |
| | | CA6: 29.4% | 2.38%CaO | |
| Example 12-1 | 30:70 | CM2A8: 28.1% | 94.67%Al₂O₃ | 3.35 |
| | | Corundum: 70% | 2.36%MgO | |
| | | | 1.60% CaO | |
| Comparative Example 1 | 65:35 | Corundum: 68.1% | 89.6%Al₂O₃ | 3.10 |
| | | MA: 23.6% | 6.78%MgO | |
| | | CA2+CA: 4.74% | 1.29%CaO | |
| Comparative Example 1 | 65:35 | CA6: 68.9% | 91.04%Al₂O₃ | 3.05 |
| | | Corundum: 24.3% | | |
| | | CA2+CA: 4.82% | 7.18%CaO | |

### Experimental example

### Static slag corrosion test

The refractory material of Example 1 was prepared into a specimen of ϕ45mm×90mm, and a pit of ϕ30mm×40mm was drilled in the middle of the specimen to form a crucible for the molten steel smelting experiments. The deoxidation method was carried out using metallic aluminum deoxidation at a temperature of 1600°C and an argon atmosphere, and the slag system was CaO-Al₂O₃-SiO₂ system.

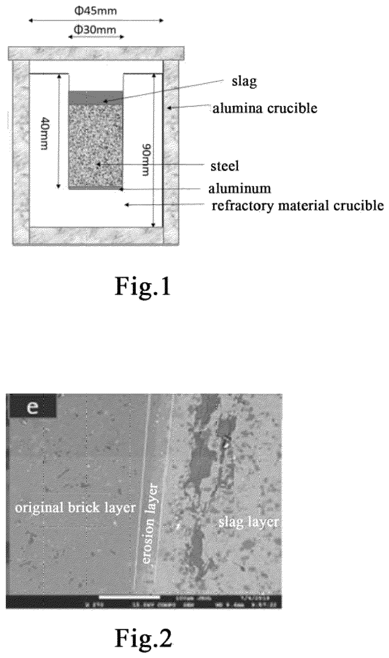

Fig. 1 shows a schematic diagram of the molten steel smelting based on the specimen of Example 1. Fig. 2 shows the microstructure of interface between the refractory material and the steel slag. It was confirmed by electron microscopy and XRD analysis that a metamorphic layer was formed at the interface, which can inhibit slag penetration and improve the size and properties of inclusions. The phases of this layer are mainly C12A7, CA2 and CA. In addition, it can be seen that the reaction interface and the transition layer of the material are very thin and the structure is homogeneous, fully indicating that the material has excellent resistance to slag penetration and slag erosion. For normal refractory materials, if the experiment is carried out in this way and with this wall thickness, the slag will completely penetrate into the crucible wall refractory material, which also shows the advantages of the refractory material of the present application over the current conventional refractory materials are very significant.

Table 3 shows the statistics of the inclusions in the steel over time after the smelting of aluminum-killed steel with the crucible prepared in Example 1. As seen from Table 3, the size distribution of inclusions in the steel gradually decreases over time, and the large-size inclusions, which are very damaging, are significantly reduced, and the effect is very obvious. This also shows that the effect of the refractory material in Example 1 on the cleanliness of the inclusions in the steel is still pronounced.

**Table 3 Distribution of inclusions at different times of smelting**

| Smelting time, min | Inclusion distribution/% | | | | |
|---|---|---|---|---|---|
| | <5µm | 5-10µm | 10-15µm | 15-20µm | >20µm |
| 0 | 49.26 | 38.98 | 10.23 | 1.53 | 0 |
| 30 | 24.47 | 69.35 | 5.37 | 0.81 | 0 |
| 30 | 36.71 | 63.29 | 0 | 0 | 0 |

Table 4 shows the statistics of inclusions in the steel, the total depth of slag erosion and penetration in steel after aluminum killed steel smelting with crucibles made of refractory materials in different examples and comparative examples, and the times of thermal shock stability of the refractory material prepared by different examples and comparative examples. The times of thermal shock stability was determined according to GB/T 30873-2014.

As seen from Table 4, the average size of the inclusions in the smelting of aluminum-killed steel based on the crucibles prepared from the refractory material of this example is relatively small, and the depths of slag erosion and slag penetration are relatively small, combining with thermal shock performance, etc.. Specifically, the performances of the refractory materials of Examples 1, 2, 3, 14, 2-1and 3-1 is optimal, the performances of the refractory materials of Examples 4, 5, 6, 7, 8, 6-1, 7-1, and 8-1 are better, and the performances of the refractory materials of Examples 9, 10, 11, 12, 13, 11-1, and 12-1 are the next better. Comparative example 1(based on corundum-spinel castable, the most commonly used ladle working lining material at present), shows that the average size of the inclusions is 2.48 µm and the area ratio is 7.52%. The average size of the inclusions in the steel is 2.45 µm and the area ratio is 6.35% based on the refractory material prepared in Comparative Example 2 (CN107500747A). In contrast, the average size of the inclusions in the steel is 1.47 µm and the area ratio is 5.89% of the steel based on the refractory material prepared in Example 1 of this application, with a significant improvement in the size of the inclusions, especially in the number of large inclusions.

**Table 4 Inclusions and refractory material properties of smelted steel grades based on relevant specimens**

| Specimen | Average size (µ m) | Area proportion (%) | Total depth of slag corrosion and penetration (mm) | Thermal shock stability(times) |
|---|---|---|---|---|
| Example 1 | 1.47 | 5.89 | 3.6 | 12 |
| Example 2 | 1.85 | 5.93 | 3.4 | 14 |
| Example 3 | 1.53 | 5.90 | 3.6 | 12 |
| Example 4 | 1.92 | 5.92 | 4.0 | 13 |
| Example 5 | 1.94 | 5.92 | 3.9 | 13 |
| Example 6 | 1.95 | 5.89 | 3.8 | 12 |
| Example 7 | 1.89 | 5.91 | 3.6 | 14 |
| Example 8 | 1.78 | 5.88 | 3.1 | 7 |
| Example 9 | 2.05 | 6.05 | 3.8 | 2 |
| Example 10 | 2.11 | 6.12 | 4.1 | 3 |
| Example 11 | 2.05 | 6.01 | 4.7 | 6 |
| Example 12 | 2.17 | 6.18 | 5.1 | 8 |
| Example 13 | 2.19 | 6.22 | 5.4 | 11 |
| Example 14 | 1.49 | 5.82 | 3.63 | 13 |
| Example 2-1 | 1.82 | 5.94 | 3.42 | 14 |
| Example 3-1 | 1.51 | 5.87 | 3.48 | 9 |
| Example 6-1 | 1.93 | 5.92 | 3.72 | 13 |
| Example 7-1 | 1.89 | 5.92 | 3.69 | 14 |
| Example 8-1 | 1.83 | 6.21 | 3.92 | 14 |
| Example 11-1 | 1.99 | 6.00 | 4.78 | 6 |
| Example 12-1 | 2.13 | 5.90 | 4.32 | 10 |
| Comparative Example 1 | 2.48 | 7.52 | 15.6 | 2 |
| Comparative Example 2 | 2.45 | 6.35 | 12.8 | 9 |

The above is only a preferred embodiment of the present application and is not intended to limit the application in other forms. Any person skilled in the art may make use of the technical content disclosed above to change or adapt it to equivalent embodiments with equivalent variations. However, any simple modifications, equivalent variations, and adaptations of the above embodiments based on the technical substance of this application, without departing from the content of the technical solution of this application, still fall within the scope of protection of the technical solution of this application.

## Claims

1. A refractory material with the function of cleaning molten steel, wherein the phase of the refractory material comprises one or two or more selected from the group consisting of: CA6, CMA, corundum and ZrO₂.

2. The refractory material according to claim 1, wherein based on the percentage of the total mass of the refractory material, the total phase content of CA6, CMA, corundum and ZrO in the refractory material is ≥90%; wherein
the phase content of CA6 is 0-100%;
the phase content of CMA is 0-100%;
the phase content of ZrO₂ is 0-35%, preferably 0-15%;
the phase content of corundum is 0-70%, preferably 0-30%;
preferably based on the percentage of the total mass of the refractory material, the total phase content of CA6 and CMA in the refractory material is 30-100%, preferably 55-100%, or 52.5-100%;
more preferably based on the percentage of the total mass of the refractory material, the phase content of CA6 in the refractory material is 30-100%, preferably 52.5-100%, or 55-100% .

3. The refractory material according to claim 1 or 2, wherein based on the percentage of the total mass of the refractory material, the content of the sintering-promoting component in the refractory material is ≤ 1.5%, preferably 0%.

4. The refractory material according to any one of claims 1-3, wherein based on the percentage of the total mass of the refractory material, the chemical composition of the refractory material comprises:
53.20-97.13% or 55.72-97.48% of Al₂O₃, preferably 71.06-94.10% or 72.86-94.12% of Al₂O₃, more preferably 75.58-94.10% of Al₂O₃;
1.60-8.40% or 1.76-8.4% of CaO, preferably 3.05-8.40% or 3.2-8.4% of CaO, more preferably 4.16-8.40% of CaO;
0-8.4% of MgO, preferably 0-6.72% of MgO; and
0-35% of ZrO₂, preferably 0-15% of ZrO₂.

5. The refractory material according to any one of claims 1-4, wherein the bulk density of the refractory material is 2.90-3.65 g/cm³, preferably 2.95-3.35 g/cm³.

6. The refractory material according to any one of claims 1-5, wherein the phase of the matrix part of the refractory material comprises one or two or more of corundum, CA6, CMA and ZrO₂;
based on the percentage of the total mass of the matrix part of the refractory material, in the matrix part
the phase content of the corundum is 0-100%, preferably 0-50%;
the phase content of CA6 is 0-100%;
the phase content of CMA is 0-100%;
the phase content of ZrO₂ is 0-50%, preferably 0-25%;
preferably based on the percentage of the total mass of the matrix part of the refractory material, the total phase content of CA6 and CMA in the matrix part is 25-100%;
more preferably based on the percentage of the total mass of the matrix part of the refractory material, the phase content of CA6 in the matrix part is 25-100%.

7. The refractory material according to any one of claims 1-6, wherein based on the percentage of the total mass of the matrix part of the refractory material, the chemical composition of the matrix part of the refractory material comprises:
41.2-99.5% or 42.5-100% of Al₂O₃, preferably 63.15-95.80% or 64.29-95.8% of Al₂O₃; more preferably 67.46-95.80% of Al₂O₃;
0-8.4% of CaO, preferably 1.35-8.40% or 1.47-8.4% of CaO, more preferably 2.0-8.40% of CaO;
0-8.4% of MgO, preferably 0-6.72% of MgO; and
0-50% of ZrO₂, preferably 0-25% of ZrO₂.

8. The refractory material according to any one of claims 1-7, wherein it is prepared by a method comprising the following steps:
mixing a granular material and a fine powder to obtain a mixed material, then subjecting the mixed material to hot-pressed sintering to obtain the refractory material.

9. The refractory material according to claim 8, wherein the mass ratio of the granular material to the fine powder is 30-65:35-70; preferably 40-65:35-60.

10. The refractory material according to claim 8 or 9, wherein the granular material is one or two selected from CA6 granular material and CMA granular material.

11. The refractory material according to any one of claims 8-10, wherein the fine powder comprises Al₂O₃-CaO-MgO system fine powder;
preferably the fine powder further comprises ZrO₂-containing fine powder;
preferably based on the percentage of the total mass of the fine powder, the fine powder comprises: 50-100% of Al₂O₃-CaO-MgO system fine powder, and 0-50% of ZrO₂-containing fine powder; preferably the fine powder comprises: 75-100% of Al₂O₃-CaO-MgO system fine powder, and 0-25% of ZrO₂-containing fine powder;
preferably the Al₂O₃-CaO-MgO system fine powder is one or two or more selected from the group consisting of: CA6 fine powder, CMA fine powder, Al₂O₃-containing fine powder, a mixed powder of Al₂O₃-containing fine powder and CaO-containing fine powder, and a mixed powder of Al₂O₃-containing fine powder, CaO-containing fine powder and MgO-containing fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, sintered magnesia fine powder, and fused magnesia fine powder;
preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, and 12CaO·7Al₂O₃ fine powder;
preferably the ZrO₂-containing fine powder is one or two or more selected from the group consisting of: monoclinic zirconia fine powder, tetragonal zirconia fine powder, desiliconized zirconium fine powder, and fused zirconia fine powder.

12. The refractory material according to any one of claims 8-11, wherein the particle size of the fine powder is less than 0.088 mm, and the particle size of the granular material is 0.088-10 mm.

13. The refractory material according to any one of claims 8-12, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and sintering it at low temperature, and then putting it into a mold of a high temperature device for hot-pressed sintering.

14. The refractory material according to any one of claims 8-13, wherein the temperature of the hot-pressed sintering is 1550-1800°C; preferably the pressure of the hot-pressed sintering is 0.5-30 MPa.

15. The refractory material according to any one of claims 8-14, wherein based on the percentage of the total mass of the granular material, the total content of CaO, Al₂O₃ and MgO in the chemical composition of the granular material is ≥97.5%, and the bulk density of the granular material is ≥2.90 g/cm³.

16. A preparation method for refractory material, comprising the following steps:
mixing a granular material and a fine powder to obtain a mixed material, then subjecting the mixed material to hot-pressed sintering to obtain the refractory material.

17. The preparation method according to claim 16, wherein the mass ratio of the granular material to the fine powder is 30-65:35-70, preferably 40-65:35-60.

18. The preparation method according to claim 16 or 17, wherein the granular material is one or two selected from CA6 granular material and CMA granular material.

19. The preparation method according to any one of claims 16-18, wherein the fine powder comprises Al₂O₃-CaO-MgO system fine powder;
preferably the fine powder further comprises ZrO₂-containing fine powder;
preferably based on the percentage of the total mass of the fine powder, the fine powder comprises: 50-100% of Al₂O₃-CaO-MgO system fine powder, and 0-50% of ZrO₂-containing fine powder; preferably the fine powder comprises: 75-100% of Al₂O₃-CaO-MgO system fine powder, and 0-25% of ZrO₂-containing fine powder;
preferably the Al₂O₃-CaO-MgO system fine powder is one or two or more selected from the group consisting of: CA6 fine powder, CMA fine powder, Al₂O₃-containing fine powder, a mixed powder of Al₂O₃-containing fine powder and CaO-containing fine powder, and a mixed powder of Al₂O₃-containing fine powder, CaO-containing fine powder and MgO-containing fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, sintered magnesia fine powder, and fused magnesia fine powder;
preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, and 12CaO·7Al₂O₃ fine powder;
preferably the ZrO₂-containing fine powder is one or two or more selected from the group consisting of: monoclinic zirconia fine powder, tetragonal zirconia fine powder, desiliconized zirconium fine powder, and fused zirconia fine powder.

20. The preparation method according to any one of claims 16-19, wherein the particle size of the fine powder is less than 0.088 mm, and the particle size of the granular material is 0.088-10 mm.

21. The preparation method according to any one of claims 16-20, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and sintering it at low temperature, and then putting it into a mold of a high temperature device for hot-pressed sintering.

22. The preparation method according to claims 16-21, wherein the temperature of the hot-pressed sintering is 1550-1800°C; preferably the pressure of the hot-pressed sintering is 0.5-30 MPa.

23. The preparation method according to any one of claims 16-22, wherein based on the percentage of the total mass of the granular material, the total content of CaO, Al₂O₃ and MgO in the chemical composition of the granular material is ≥97.5%, and the bulk density of the granular material is ≥2.90 g/cm³.

24. A working lining of a ladle for molten steel smelting, wherein it comprises the refractory material according to any one of claims 1-15, or the refractory material prepared by the preparation method according to any one of claims 16-23.

25. A working lining for molten aluminum smelting and transporting ladles, wherein it comprises the refractory material according to any one of claims 1-15, or the refractory material prepared by the preparation method according to any one of claims 16-23.

26. A refractory lining for industrial furnaces, wherein it comprises the refractory material according to any one of claims 1-15, or the refractory material prepared by the preparation method according to any one of claims 16-23.
